# EUROPEAN PATENT APPLICATION

(11) **EP 4 738 964 A1**
(43) Date of publication of application: **06.05.2026**
(21) Application number: 23942796.6
(22) Date of filing: 28.06.2023
(51) Int. Cl.: H04W 72/232

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Gunzelmann, Rainer
(86) International application number: PCT/CN2023/103314
(87) International publication number: WO 2025/000275

(57) **Abstract**

Provided in the embodiments of the present disclosure are an information processing method and apparatus, and a communication device and a storage medium. The information processing method executed by a terminal may comprise: receiving downlink control information (DCI), wherein the DCI is configured to indicate a plurality of physical downlink shared channel (PDSCH) transmissions in a plurality of slots; and according to the DCI, determining a frequency domain for the PDSCH transmissions on symbols in each slot that are used for the PDSCH transmissions, wherein the symbols comprise at least one of a sub-band full-duplex (SBFD) symbol and a non-SBFD symbol.

## Description

### TECHNICAL FIELD

The present disclosure relates to, but is not limited to, the field of communication technology, and specifically to an information processing method and apparatus, a communication device, and a storage medium.

### BACKGROUND

In the field of communication technology, in order to improve uplink coverage and throughput, research on subband full duplex (SBFD) has been carried out. In an SBFD scenario, downlink (DL) symbols, SBFD symbols, flexible (F) symbols and uplink (UL) symbols are introduced.

### SUMMARY

Embodiments of the present disclosure provide an information processing method and apparatus, a communication device, and a storage medium.

According to a first aspect of embodiments of the present disclosure, an information processing method is provided. The method is performed by a terminal and includes:
receiving downlink control information (DCI), in which the DCI indicates a plurality of physical downlink shared channel (PDSCH) transmissions in a plurality of time slots; and
determining, according to the DCI, a frequency domain range used for a PDSCH transmission on one or more symbols used for the PDSCH transmission in each time slot, in which a symbol includes at least one of a sub-band full-duplex (SBFD) symbol or a non-SBFD symbol.

According to a second aspect of the embodiments of the present disclosure, an information processing method is provided. The method is performed by a network device and includes:
sending downlink control information (DCI), in which the DCI indicates a plurality of physical downlink shared channel (PDSCH) transmissions in a plurality of time slots, each of one or more symbols used for a PDSCH transmission in each time slot includes at least one of a sub-band full-duplex (SBFD) symbol or a non-SBFD symbol, and a frequency domain range used for the PDSCH transmission in one or more SBFD symbols is the same as or different from a frequency domain range used for the PDSCH transmission in one or more non-SBFD symbols.

According to a third aspect of the embodiments of the present disclosure, a terminal is provided. The terminal includes:
a receiving module, configured to receive downlink control information (DCI), in which the DCI indicates a plurality of physical downlink shared channel (PDSCH) transmissions in a plurality of time slots; and
a determining module, configured to determine, according to the DCI, a frequency domain range used for a PDSCH transmission on one or more symbols used for the PDSCH transmission in each time slot, in which a symbol includes at least one of a sub-band full-duplex (SBFD) symbol or a non-SBFD symbol.

According to a fourth aspect of the embodiments of the present disclosure, a network device is provided, including:
a sending module, configured to send downlink control information (DCI), in which the DCI indicates a plurality of physical downlink shared channel (PDSCH) transmissions in a plurality of time slots, each of one or more symbols used for a PDSCH transmission in each time slot includes at least one of a sub-band full-duplex (SBFD) symbol or a non-SBFD symbol, and a frequency domain range used for the PDSCH transmission in one or more SBFD symbols is the same as or different from a frequency domain range used for the PDSCH transmission in one or more non-SBFD symbols.

According to a fifth aspect of the embodiments of the present disclosure, a terminal is provided, including:
one or more processors;
in which the terminal is configured to perform the information processing method according to any of the first aspect.

According to a sixth aspect of the embodiments of the present disclosure, a network device is provided, including:
one or more processors;
in which the network device is configured to perform the information processing method according to any of the second aspect.

According to a seventh aspect of the embodiments of the present disclosure, a communication system is provided, including a terminal and a network device, in which the terminal is configured to perform the information processing method according to any of the first aspect, and the network device is configured to perform the information processing method according to any of the second aspect.

According to a seventh aspect of the embodiments of the present disclosure, a storage medium having instructions stored thereon is provided. When the instructions are executed on a communication device, the communication device is caused to perform the information processing method according to any of the first aspect, or the second aspect.

In the technical solution provided by the embodiments of the present disclosure, by receiving the DCI which is used to indicate multiple PDSCH transmissions in multiple time slots; and determining, according to the DCI, the frequency domain range used for the PDSCH transmission on one or more symbols used for the PDSCH transmission in each time slot, in which the symbol includes at least one of an SBFD symbol or a non-SBFD symbol, the frequency domain range on the one or more SBFD symbols and the one or more non-SBFD symbols where the PDSCH transmission is located can be clearly determined, thereby improving reliability of the PDSCH transmission.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of this specification, illustrate embodiments consistent with the present invention and, together with the description, serve to explain the principles of the embodiments of the present disclosure.
FIG. 1 is a schematic diagram of a wireless communication system according to an embodiment;
FIG. 2a is a schematic diagram of a structure of different time slots according to an embodiment;
FIG. 2b is a schematic diagram showing a plurality of PDSCH transmissions according to an embodiment;
FIG. 2c is a schematic diagram showing a plurality of PDSCH transmissions according to an embodiment;
FIG. 3 is a flowchart of an information processing method according to an embodiment;
FIG. 4 is a schematic diagram showing a downlink (DL) frequency domain range according to an embodiment;
FIG. 5a is a schematic diagram showing a plurality of PDSCH transmissions according to an embodiment;
FIG. 5b is a schematic diagram showing a plurality of PDSCH transmissions according to an embodiment;
FIG. 5c is a schematic diagram showing a plurality of PDSCH transmissions according to an embodiment;
FIG. 5d is a schematic diagram showing a plurality of PDSCH transmissions according to an embodiment;
FIG. 6a is a schematic diagram showing a time-frequency resource occupancy of a plurality of PDSCH transmissions according to an embodiment;
FIG. 6b is a schematic diagram showing a time-frequency resource occupancy of a plurality of PDSCH transmissions according to an embodiment;
FIG. 6c is a schematic diagram showing a time-frequency resource occupancy of a plurality of PDSCH transmissions according to an embodiment;
FIG. 6d is a schematic diagram showing a time-frequency resource occupancy of a plurality of PDSCH transmissions according to an embodiment;
FIG. 6e is a schematic diagram showing a time-frequency resource occupancy of a plurality of PDSCH transmissions according to an embodiment;
FIG. 6f is a schematic diagram showing a time-frequency resource occupancy of a plurality of PDSCH transmissions according to an embodiment;
FIG. 6g is a schematic diagram showing a plurality of PDSCH transmissions according to an embodiment;
FIG. 7 is a schematic diagram showing a semi-persistent scheduling (SPS) physical downlink shared channel (PDSCH) repetition according to an embodiment;
FIG. 8 is a flowchart of an information processing method according to an embodiment;
FIG. 9 is a flowchart of an information processing method according to an embodiment;
FIG. 10 is a block diagram of a terminal according to an embodiment;
FIG. 11 is a block diagram of a network device according to an embodiment;
FIG. 12 is a block diagram of a user equipment (UE) according to an embodiment; and
FIG. 13 is a block diagram of a communication device according to an embodiment.

### DETAILED DESCRIPTION

The technical solution in the embodiments of the present disclosure will be described clearly and completely in combination of the accompanying drawings below. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first information may also be referred to as the second information, and likewise the second information may be referred to as the first information. Depending on the context, the words "if" and "in a case" used here may be interpreted as "when" or "in response to determining".

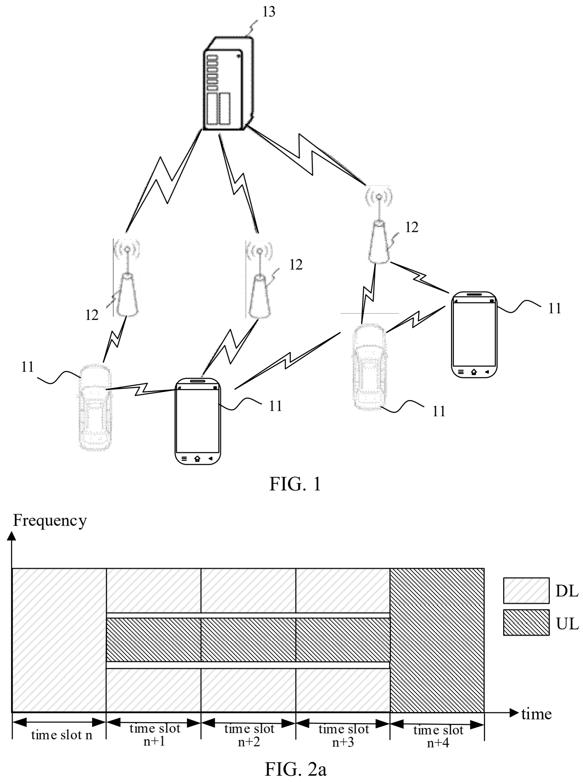

With reference to FIG. 1, FIG. 1 is a schematic diagram of a wireless communication system according to an embodiment of the present disclosure. As shown in FIG. 1, the wireless communication system is a communication system based on the cellular mobile communication technology, and the wireless communication system may include: a plurality of UEs 11 and a plurality of access network devices 12.

The UE 11 may be a device that provides voice and/or data connectivity to users. The UE 11 may communicate with one or more core network nodes via a radio access network (RAN). The UE 11 may be an Internet of Things (IoT) UE, such as a sensor device, a mobile phone (or a "cellular" phone), and a computer with an IoT terminal. For example, it may be a fixed, portable, pocket-sized, handheld, computer-built-in or vehicle-mounted device. For example, it may be a station (STA), a subscriber unit, a subscriber station, a mobile station, a mobile, a remote station, an access point, a remote terminal, an access terminal, a user terminal, a user agent, a user device, or a user (user equipment, UE). Alternatively, the UE 11 may also be a wearable device, a virtual reality (VR) device, an augmented reality (AR) device, or a VR/AR hybrid head-mounted device. Alternatively, the UE 11 may also be a device of an unmanned aerial vehicle (UAV). Alternatively, the UE 11 may also be a vehicle-mounted device, for example, it may be a driving computer with a wireless communication function, or a wireless communication device externally connected to the driving computer. Alternatively, the UE 11 may also be a roadside device, for example, a street lamp, a signal lamp or other roadside devices with a wireless communication function.

The access network device 12 may be may be a device for communicating with the UE 11 in the wireless communication system, which may be a base station, or an access point, or a network device, or may refer to a device in an access network that communicates with a wireless terminal through one or more sectors on the air interface. The network device may be used to convert received air frames and IP packets to each other, configured as a router between the wireless terminal and the rest of the access network, in which the rest of the access network may include an Internet Protocol (IP) network. The network device may also coordinate an attribute management of air interfaces. The wireless communication system may be a fourth-generation mobile communication (4G) system, also known as a long-term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as new generation-radio access network (NG-RAN). Alternatively, the wireless communication system may be a machine type communication (MTC) system.

The access network device 12 may be an evolved access device (eNB) adopted in the 4G system. Alternatively, the access network device 12 may also be a base station (gNB) adopting a centralized distributed architecture in the 5G system. When the access network device 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the access network device 12 is not limited in the embodiments of the present disclosure.

A wireless connection may be established between the access network device 12 and the UE 11 via a wireless air interface. In different implementations, the wireless air interface is a wireless air interface based on a fourth generation mobile communication network technology (4G) standard; or the wireless air interface is a wireless air interface based on a fifth generation mobile communication network technology (5G) standard, for example, the wireless air interface is a new radio interface; or the wireless air interface may also be a wireless air interface based on a next generation mobile communication network technology standard of the 5G standard.

In some embodiments, an E2E (End to End) or D2D (device to device) connection may also be established between UEs 11, such as V2V (vehicle to vehicle) communication, V2I (vehicle to Infrastructure) communication and V2P (vehicle to pedestrian) communication in vehicle to everything (V2X) communication.

In some embodiments, the wireless communication system may further include a core network device 13. The several access network devices 12 are connected to the core network device 13, respectively.

In some embodiments, the core network device 13 may be a mobility management entity (MME) in an evolved packet core (EPC) network. Alternatively, the core network device 13 may also be other core network devices, such as a serving gateway (SGW), a public data network gateway (PGW), a policy and charging rules function (PCRF) or a home subscriber server (HSS), etc.

In some embodiments, the core network device 13 may include one or more network elements, for example, an access and mobility management function (AMF), a session management function (SMF), a user plane function (UPF), a policy control function (PCF), a network repository function (NRF) entity, or the like.

In order to facilitate the understanding of those skilled in the art, the embodiments of the present disclosure list multiple implementations to clearly illustrate the technical solutions of the embodiments of the present disclosure. Of course, those skilled in the art can understand that the multiple embodiments provided by the embodiments of the present disclosure can be executed separately, or can be executed together with the methods of other embodiments of the embodiments of the present disclosure, or can be executed together with some methods in other related technologies separately or in combination, which are not limited in the embodiments of the present disclosure.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In order to improve uplink coverage and throughput, duplex enhancement (duplex enhancement) has been studied on sub-band full-duplex (SBFD).

In some embodiments, one carrier component (CC) is divided into multiple subbands (SBs) in a frequency domain range on a downlink or flexible (F) symbol, and the multiple SBs include one UL subband and at least one (1 or 2) DL subband. A base station may send DL signals in the DL subband and receive UL signals in the UL subband at the same time.

In some examples, the DL or F symbol may be configured in at least one of the following ways:
common signaling, such as TDD-UL-DL-ConfigCommon configuration;
dedicated signaling, such as TDD-UL-DL-ConfigDedicated configuration; or
physical layer signaling, for example, a DCI Format 2_0 indication.

In some examples, one time slot contains multiple symbols, for example, for a normal cyclic prefix (CP), each time slot contains 14 orthogonal frequency division multiplexing (OFDM) symbols; for an extended CP, each time slot contains 12 OFDM symbols.

In the embodiments of the present disclosure, one symbol includes both a DL subband and a UL subband in the frequency domain, and the symbol may be called an SBFD symbol.

When multiple symbols contained in one time slot include at least one SBFD symbol, the time slot may be called an SBFD time slot.

With reference to FIG. 2a, time slot n is a DL time slot, time slot n+1 to time slot n+3 are all SBFD time slots, and time slot n+4 is a UL time slot.

All the multiple symbols contained in the DL time slot are downlink (DL) symbols, and all the multiple symbols contained in the UL time slot are uplink (UL) symbols.

In some embodiments, when all the multiple symbols contained in a time slot are SBFD symbols, the time slot may be called an SBFD time slot.

In some embodiments, there may be a guard band (GB) between the DL subband and the UL subband to reduce interference between a DL signal in the DL subband and a UL signal in the UL subband through frequency domain isolation.

In some embodiments, downlink control information (DCI) indicates that the physical downlink shared channel (PDSCH) is transmitted in multiple time slots, which may be in the following forms.
1. In a PDSCH aggregation or repetition, the DCI indicates that the PDSCH is received in k consecutive time slots.
2. In a semi-persistent schedule (SPS) PDSCH transmission, the DCI activates an SPS PDSCH configured by the radio resource control (RRC) signaling, and the UE periodically receives the PDSCH on certain time domain resources.
   In some examples, the number of repetitions k of the SPS PDSCH may be configured via RRC signaling.
3. When one DCI schedules multiple PDSCH transmissions, the DCI indicates at least one of the following: allocation of one frequency domain resource, allocation of multiple time domain resources, and receiving the PDSCH in multiple time-frequency resources.

In some embodiments, a frequency domain (FD) range available for a DL transmission in the SBFD symbol(s) may be discontinuous. One possible case is that the GB and the UL subband are not available for the DL transmission. In this case, the frequency domain ranges available for the DL transmission of the DL symbol(s) and the SBFD symbol(s) are different. The DCI indicates that the UE receives the PDSCH in multiple time slots. In one time slot, the frequency domain range on the SBFD symbol(s) and non-SBFD symbol(s) where the PDSCH is located needs to be determined.

In some embodiments, the DCI indicates that the UE receives the PDSCH in multiple time slots, and the PDSCH may be: PDSCH repetition (repeated transmission), SPS PDSCH with or without repetition, or multiple PDSCHs scheduled by a single DCI.
(1) PDSCH repetition
   Configuration parameters in RRC signaling: pdsch-AggregationFactor, ENUMERATED {n2, n4, n8};
   According to the frequency domain range FD#1 indicated by the DCI, the PDSCH is received in k consecutive time slots, where k=pdsch-AggregationFactor.
(2) SPS PDSCH with or without repetition

Configuration parameters in RRC signaling: PDSCH period P, the number of HARQ processes, the number of repetitions k = pdsch-AggregationFactor-r16, ENUMERATED {n1, n2, n4, n8} and other information.

If pdsch-AggregationFactor-r16 is not configured, the number of repetitions k is determined according to pdsch-AggregationFactor an information element (IE) PDSCH-config.

The PDSCH is received periodically according to the time-frequency range indicated by DCI.

### (3) Single DCI schedules multiple PDSCHs

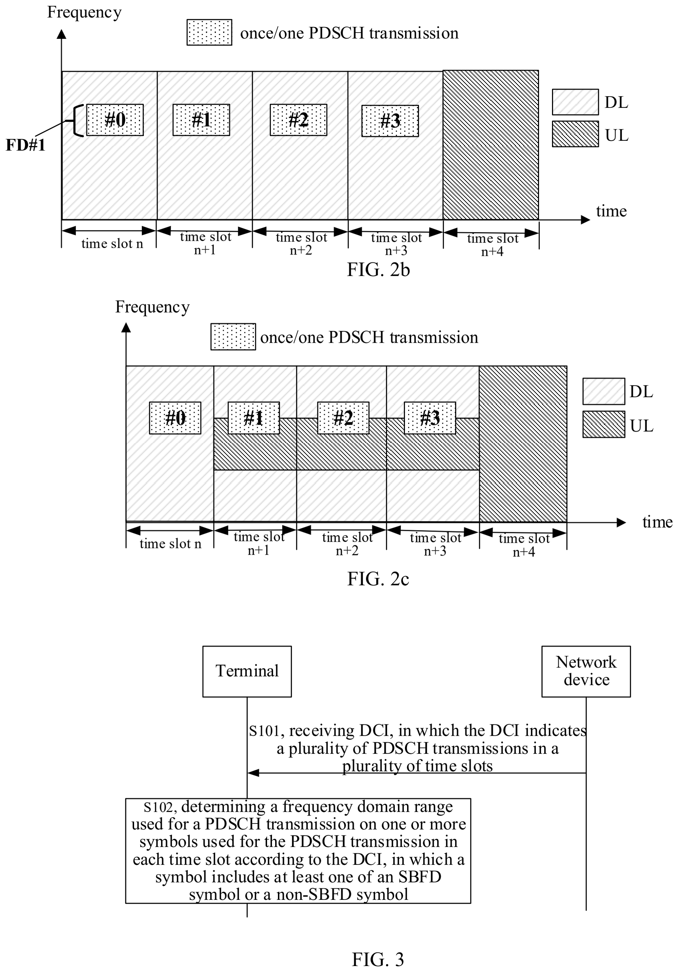

With reference to FIG. 2b, according to multiple time domain ranges and one frequency domain range FD#1 indicated by the DCI, the UE receives PDSCH#0, PDSCH#1, PDSCH#2, and PDSCH#3 in FD#1 within the indicated multiple time domain ranges.

With reference to FIG. 2c, the symbol where PDSCH#0 is located is a DL symbol, while the symbols where PDSCH#1, PDSCH#2, and PDSCH#3 are located are all SBFD symbols, and overlap with the outside of the DL frequency domain range (the DL transmission is not available outside of the DL frequency domain range). In this case, it is required to determine the frequency domain ranges used by PDSCH#0, PDSCH#1, PDSCH#2, and PDSCH#3.

FIG. 3 is a flowchart of an information processing method according to an embodiment. The information processing method is performed by a terminal, as shown in FIG. 3, and the information processing method may include the following steps.

At step S101, DCI is received, in which the DCI indicates a plurality of PDSCH transmissions in a plurality of time slots.

At step S102, a frequency domain range used for a PDSCH transmission is determined on one or more symbols used for the PDSCH transmission in each time slot according to the DCI, in which a symbol includes at least one of an SBFD symbol or a non-SBFD symbol.

In some examples, the terminal may be any of various mobile terminals or fixed terminals, such as including, but not limited to, mobile phones, wearable devices, IoT devices, etc.

In some examples, the terminal receives the DCI sent by a network device. The network device may be a base station, and the base station may be, for example, a gNB.

In some examples, the PDSCH transmission is used for transmission of downlink data, such as transmission of unicast data, paging signals, random access response messages, or other data.

In some examples, the plurality of PDSCH transmissions indicated by the DCI may be multiple different PDSCH transmissions or multiple repetitions of the same PDSCH.

In some examples, the DCI is used to instruct the terminal to receive the PDSCH in multiple time slots, for example, the DCI is used to instruct the terminal to perform PDSCH repetitions in multiple time slots, SPS PDSCH with or without repetition, or to instruct the terminal to receive multiple PDSCH transmissions scheduled by a single DCI.

In some examples, the DCI may be used to indicate time domain resource information used for the PDSCH transmission.

For example, the time domain resource information includes information such as a time slot position, a starting symbol position in the time slot, a time domain length, etc. The time domain length can be used to indicate the number of consecutive symbols allocated to the PDSCH, counting from the starting symbol position.

For example, time domain resource allocation information of the DCI includes a row index, and the row index is used by the terminal to search for the time domain resource information used for the PDSCH transmission from a pre-configured time domain resource allocation table.

In some examples, the DCI may be used to indicate a symbol position occupied by the PDSCH within each of the plurality of time slots.

In some examples, the symbols in one time slot may be all SBFD symbols, or all non-SBFD symbols, or may include both SBFD and non-SBFD symbols.

In some examples, the SBFD symbol is a symbol that includes both a DL subband and a UL subband in the frequency domain, and the non-SBFD symbol is a symbol that does not include both a DL subband and a UL subband in the frequency domain. For example, the non-SBFD symbol is a DL symbol or a UL symbol or an F symbol.

In some examples, the DCI may indicate the plurality of PDSCH transmissions based on mini-slot scheduling. A mini-slot may consist of some consecutive symbols in one time slot. For example, a length of a downlink mini-slot may be 2, 4 or 7 symbols, and the mini-slot may start at any symbol in a time slot.

In some examples, the symbols used for the PDSCH transmissions in the plurality of time slots may be notified to the terminal by the network through higher-layer signaling or physical layer signaling. For example, the physical layer signaling includes the DCI.

In some examples, the symbols used for the PDSCH transmissions in the plurality of time slots include SBFD symbols and/or non-SBFD symbols.

For example, all symbols used for the PDSCH transmission in one time slot are non-SBFD symbols; or, all symbols used for the PDSCH transmission in one time slot are SBFD symbols; or, the symbols used for the PDSCH transmission in one time slot include SBFD symbols and non-SBFD symbols.

In some examples, types of symbols used for PDSCH transmissions in different time slots may be the same or different, for example, the symbols used for the PDSCH transmission in time slot n are all non-SBFD symbols, the symbols used for the PDSCH transmission in time slot n+1 are all SBFD symbols, and the symbols used for the PDSCH transmission in time slot n+2 include SBFD symbols and non-SBFD symbols.

In some examples, a frequency domain range used for the PDSCH transmission in SBFD symbols is the same as or different from a frequency domain range used for the PDSCH transmission in non-SBFD symbols.

In some examples, the DCI may be used to indicate the frequency domain range used for the PDSCH transmission in the non-SBFD symbols. For example, an FDRA (Frequency Domain Resource Allocation) field in the DCI indicates that the frequency domain range used for the PDSCH transmission in the non-SBFD symbols is a first frequency domain range.

In some examples, the frequency domain range of the PDSCH transmission is used to indicate a frequency domain position occupied by the PDSCH transmission.

In some examples, the frequency domain range may be characterized by a resource grid (RG), a bandwidth part (BWP), a physical resource block (PRB) and/or a resource block (RB).

In some examples, in the SBFD symbol(s), a frequency domain range usable for a DL transmission is called a DL frequency domain range, and a frequency domain range unusable for the DL transmission is called a non-DL frequency domain range.

In some examples, the DL frequency domain range may be a frequency domain range where a DL subband overlaps with a BWP.

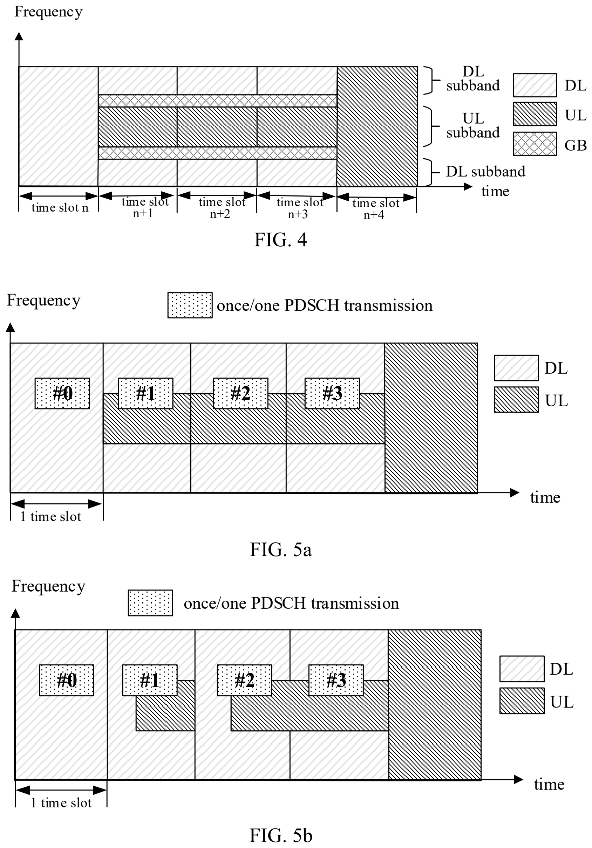

As shown in FIG. 4, time slot n is a DL time slot, time slots n+1 to n+3 are all SBFD time slots, and time slot n+4 is a UL time slot. The symbols contained in time slot n and the symbols contained in time slot n+4 are all non-SBFD symbols, and the symbols contained in time slots n+1 to n+3 are all SBFD symbols. In the SBFD symbol, the DL frequency domain range may be a frequency domain range where the DL subband overlaps with the BWP, and a frequency domain range where the GB and UL subband overlap with the BWP is a non-DL frequency domain range.

In some other examples, the DL frequency domain range may be a frequency domain range where the DL subband and the GB overlap with the BWP.

In some examples, the frequency domain range used for the PDSCH transmission in the SBFD symbol(s) is a second frequency domain range, and the second frequency domain range may be a frequency domain range where a first frequency domain range indicated by the DCI overlaps with the DL frequency domain range in the SBFD symbol(s).

In the information processing method provided in the embodiments of the present disclosure, by receiving the DCI which is used to indicate multiple PDSCH transmissions in multiple time slots; and determining, according to the DCI, the frequency domain range used for the PDSCH transmission on one or more symbols used for the PDSCH transmission in each time slot, in which the symbol includes at least one of an SBFD symbol or a non-SBFD symbol, the frequency domain range on the one or more SBFD symbols and the one or more non-SBFD symbols where the PDSCH transmission is located can be clearly determined, thereby improving reliability of the PDSCH transmission and making up for the deficiency in the prior art of lacking a method of determining the frequency domain range of the PDSCH transmission in the SBFD symbol(s).

In some embodiments, the method may further include:
receiving first information; in which the first information indicates at least one of:
a category of symbols usable for the plurality of PDSCH transmissions; or
a category of symbols usable for any one of the plurality of PDSCH transmissions.

In this embodiment, by receiving the first information which clearly indicates at least one of the category of symbols usable for multiple PDSCH transmissions or the category of symbols usable for any one of the multiple PDSCH transmissions, the category of symbols usable for the PDSCH transmission can be clearly determined, thereby improving the reliability of performing the multiple PDSCH transmissions compared to the situation where the symbol category is uncertain.

In some embodiments, the first information indicates at least one of the following:
the plurality of PDSCH transmissions being capable of using SBFD symbols and non-SBFD symbols, and any one of the plurality of PDSCH transmissions being capable of using one or more SBFD symbols or one or more non-SBFD symbols;
the plurality of PDSCH transmissions being capable of using SBFD symbols and non-SBFD symbols, and any one of the plurality of PDSCH transmissions being capable of using one or more SBFD symbols and one or more non-SBFD symbols;
the plurality of PDSCH transmissions being capable of using SBFD symbols, and any one of the plurality of PDSCH transmissions being capable of using one or more SBFD symbols; or
the plurality of PDSCH transmissions being capable of using non-SBFD symbols, and any one of the plurality of PDSCH transmissions being capable of using one or more non-SBFD symbols.

The multiple PDSCH transmissions can use SBFD symbols and non-SBFD symbols, and any one of the multiple PDSCH transmissions can only use one or more SBFD symbols or one or more non-SBFD symbols. As shown in FIG. 5a, PDSCH#0 to PDSCH#3 transmissions can use SBFD symbols and non-SBFD symbols, PDSCH#0 transmission uses one or more non-SBFD symbols, and PDSCH#1 to PDSCH#3 transmissions use SBFD symbols.

The multiple PDSCH transmissions can use SBFD symbols and non-SBFD symbols, and any one of the multiple PDSCH transmissions can use one or more SBFD symbols and one or more non-SBFD symbols. As shown in FIG. 5b, PDSCH#0 to PDSCH#3 transmissions can use SBFD symbols and non-SBFD symbols, PDSCH#0 transmission uses one or more non-SBFD symbols, PDSCH#1 to PDSCH#2 transmissions use both of one or more SBFD symbols and one or more non-SBFD symbols, and PDSCH#3 transmission uses one or more SBFD symbols.

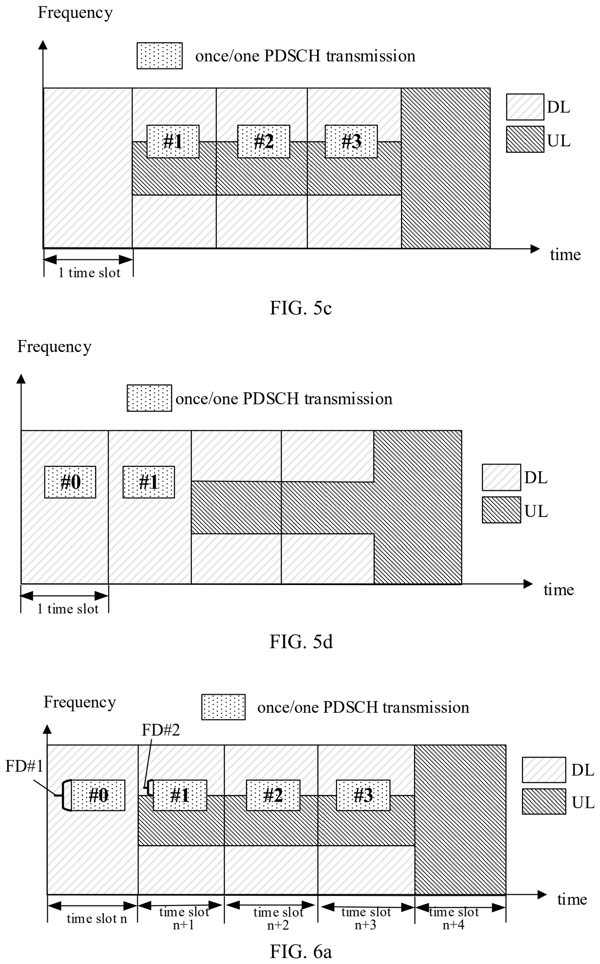

The multiple PDSCH transmissions can use SBFD symbols, and any one of the multiple PDSCH transmissions can use one or more SBFD symbols. As shown in FIG. 5c, PDSCH#1 to PDSCH#3 transmissions use SBFD symbols, and any one of PDSCH#1 to PDSCH#3 transmissions uses one or more SBFD symbols.

The multiple PDSCH transmissions can use non-SBFD symbols, and any one of the multiple PDSCH transmissions can use one or more non-SBFD symbols. As shown in FIG. 5d, PDSCH#0 to PDSCH#1 transmissions use non-SBFD symbols, and any one of PDSCH#0 to PDSCH#1 transmissions uses one or more non-SBFD symbols.

In this embodiment, the first information clearly indicates symbols usable for the multiple PDSCH transmissions and symbols usable for any one of the multiple PDSCH transmissions, so that the multiple PDSCH transmissions are more reliable.

In some embodiments, receiving the first information may include:
receiving the first information sent through a first message, in which the first message includes at least one of a DCI message, a radio resource control (RRC) message, a media access control (MAC) control element (CE) message, and a system information block (SIB).

In some embodiments, the terminal receives the first information sent by the network device through a DCI message.

In some embodiments, the terminal receives the first information sent by the network device through an RRC message.

In some embodiments, the terminal receives the first information sent by the network device through a MAC CE message.

In some embodiments, the terminal receives the first information sent by the network device through a SIB1 message.

In this embodiment, the first information may be received by multiplexing the messages in the communication process, which can reduce signaling overhead, reduce resource consumption, and improve resource utilization efficiency.

In some embodiments, in the above step S102, determining the frequency domain range used for the PDSCH transmission on the one or more symbols used for the PDSCH transmission in each time slot according to the DCI may include at least one of the following:
for any time slot, in a case where one or more symbols used for the PDSCH transmission in the time slot include one or more non-SBFD symbols, determining the frequency domain range used for the PDSCH transmission in the one or more non-SBFD symbols as a first frequency domain range, in which the first frequency domain range is a frequency domain range indicated by the DCI for the one or more non-SBFD symbols; or
for any time slot, in a case where one or more symbols used for the PDSCH transmission in the time slot include one or more SBFD symbols, determining the frequency domain range used for the PDSCH transmission in the one or more SBFD symbols as a target frequency domain range.

In some examples, the FDRA field in the DCI indicates that the frequency domain range used for the PDSCH transmission in the one or more non-SBFD symbols is the first frequency domain range.

In some examples, the target frequency domain range may be the same as or different from the first frequency domain range.

In this embodiment, by determining the frequency domain range used for the PDSCH transmission in the one or more non-SBFD symbols as the first frequency domain range, and determining the frequency domain range used for the PDSCH transmission in the one or more SBFD symbols as the target frequency domain range, the frequency ranges used when receiving the PDSCH transmission on the one or more non-SBFD symbols and the one or more SBFD symbols are determined, so that the UE may receive the PDSCH transmission at the correct position, thereby improving reliability of the PDSCH transmission. In some embodiments, the target frequency domain range is a second frequency domain range, in which the second frequency domain range is a frequency domain range where the first frequency domain range overlaps with a DL frequency domain range in the one or more SBFD symbols.

In this embodiment, for any time slot, if the one or more symbols used for the PDSCH transmission in the time slot include one or more non-SBFD symbols, the frequency domain range used for the PDSCH transmission in the one or more non-SBFD symbols of the time slot is determined to be the first frequency domain range (for example, FD#1); if the one or more symbols used for the PDSCH transmission in the time slot include one or more SBFD symbols, the frequency domain range used for the PDSCH transmission in the one or more SBFD symbols of the time slot is determined to be the second frequency domain range (for example, FD#2).

In some examples, for any time slot, the one or more symbols used for the PDSCH transmission in the time slot include only one or more SBFD symbols or one or more non-SBFD symbols. The frequency domain range used for the PDSCH transmission in the one or more non-SBFD symbols is the first frequency domain range, and the frequency domain range used for the PDSCH transmission in the one or more SBFD symbols is the second frequency domain range.

With reference to FIG. 6a, time slot n is a DL time slot, and the symbols of time slot n are all non-SBFD symbols; time slots n+1 to time slot n+3 are all SBFD time slots, and the symbols of time slots n+1 to time slot n+3 are all SBFD symbols. The frequency domain range indicated by the DCI for the non-SBFD symbol(s) is FD#1, so it may be determined that the frequency domain range used for PDSCH#0 transmission in the non-SBFD symbol(s) of time slot n is FD#1. The symbol(s) used for PDSCH#1 transmission in time slot n+1 is(are) the SBFD symbol(s), so it may be determined that the frequency domain range used for PDSCH#1 transmission in the SBFD symbol(s) of time slot n+1 is FD#2. The symbol(s) used for PDSCH#2 transmission in time slot n+2 is(are) the SBFD symbol(s), so it may be determined that the frequency domain range used for PDSCH#2 transmission in the SBFD symbol(s) of time slot n+2 is FD#2. The symbol(s) used for PDSCH#3 transmission in time slot n+3 is(are) the SBFD symbol(s), so it may be determined that the frequency domain range used for PDSCH#3 transmission in the SBFD symbol(s) of time slot n+3 is FD#2. FD#2 is a frequency domain range where FD#1 overlaps with a DL frequency domain range in the SBFD symbols.

In other examples, the symbols used for the PDSCH transmission in a certain time slot may include the SBFD symbol(s) and the non-SBFD symbol(s). The frequency domain range used for the PDSCH transmission in the non-SBFD symbol(s) is the first frequency domain range, and the frequency domain range used for the PDSCH transmission in the SBFD symbol(s) is the second frequency domain range.

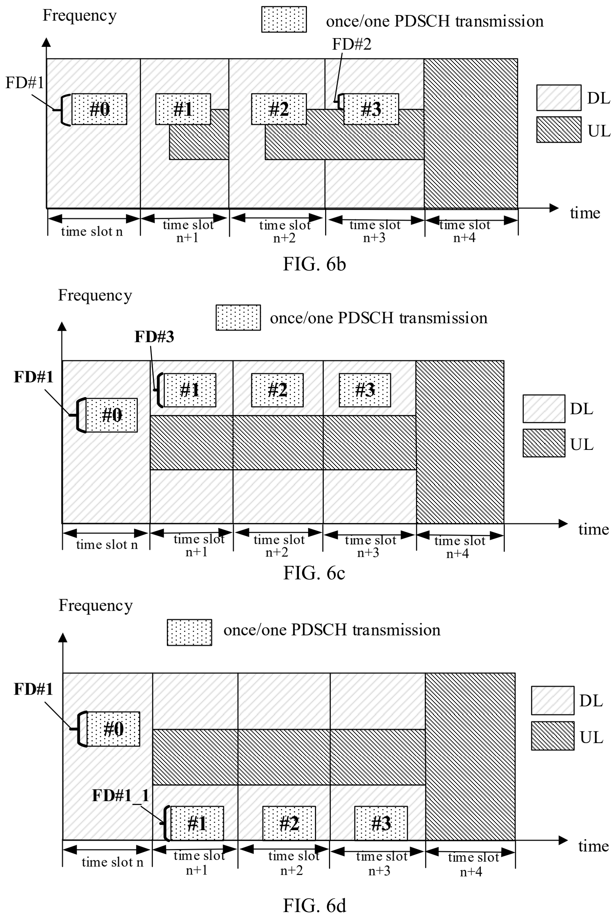

With reference to FIG. 6b, time slot n is a DL time slot, and the symbols of time slot n are all non-SBFD symbols; time slot n+1 to time slot n+3 are all SBFD time slots, and the symbols used for PDSCH#1 transmission in time slot n+1 include the non-SBFD symbol(s) and the SBFD symbol(s); the symbols used for PDSCH#2 transmission in time slot n+2 include the non-SBFD symbol(s) and the SBFD symbol(s); the symbols used for PDSCH#3 transmission in time slot n+3 are all SBFD symbols. The frequency domain range indicated by the DCI for the non-SBFD symbol(s) is FD#1, and it may be determined that the frequency domain range used for PDSCH#0 transmission in the non-SBFD symbol(s) of time slot n is FD#1; the frequency domain range used for PDSCH#1 transmission in the non-SBFD symbol(s) of time slot n+1 is FD#1, and the frequency domain range used for PDSCH#1 transmission in the SBFD symbol(s) of time slot n+1 is FD#2; the frequency domain range used for PDSCH#2 transmission in the non-SBFD symbol(s) of time slot n+2 is FD#1, and the frequency domain range used for PDSCH#2 transmission in the SBFD symbol(s) of time slot n+2 is FD#2; the frequency domain range used for PDSCH#3 transmission in the SBFD symbol(s) of time slot n+3 is FD#2. FD#2 is a frequency domain range where FD#1 overlaps with the DL frequency domain range in the SBFD symbol(s).

In this embodiment, by determining the frequency domain range used for the PDSCH transmission in the non-SBFD symbol(s) as the first frequency domain range, and determining the frequency domain range used for the PDSCH transmission in the SBFD symbol(s) as the second frequency domain range, in which the second frequency domain range is the frequency domain range where the first frequency domain range overlaps with the DL frequency domain range in the SBFD symbol(s), the frequency ranges used when receiving the PDSCH transmission on non-SBFD symbols and SBFD symbols are determined, so that the UE may receive the PDSCH transmission at the correct position, thereby improving reliability of the PDSCH transmission. In addition, the number of PDSCHs for which the reception is canceled in the multiple PDSCH transmissions may be reduced as much as possible, so the number of received PDSCH transmissions in the multiple PDSCH transmissions may be increased, thereby improving downlink throughput, and the number of times that the same PDSCH is received for multiple repetitions can be increased, thereby increasing the downlink coverage. In addition, since no additional signaling is required to indicate the frequency domain range of the PDSCH transmission in the SBFD symbol(s), the implementation is simple, the complexity is low, and the signaling overhead is reduced.

In some embodiments, the target frequency domain range is a third frequency domain range, in which the third frequency domain range is a frequency domain range indicated by the DCI for the SBFD symbol(s).

In this embodiment, for any time slot, if the symbol(s) used for the PDSCH transmission in the time slot includes the non-SBFD symbol(s), the frequency domain range used for the PDSCH transmission in the non-SBFD symbol(s) of the time slot is determined to be the first frequency domain range (for example, FD#1); if the symbol(s) used for the PDSCH transmission in the time slot includes SBFD symbol, the frequency domain range used for the PDSCH transmission in the SBFD symbol(s) of the time slot is determined to be the third frequency domain range (for example, FD#3).

For example, the DCI includes two FDRAs, and the two FDRAs respectively indicate FD#1 and FD#3, FD#1 is used for the non-SBFD symbol(s), and FD#3 is used for the SBFD symbol(s).

With reference to FIG. 6c, time slot n is a DL time slot, and the symbols of time slot n are all non-SBFD symbols; time slots n+1 to time slot n+3 are all SBFD time slots, and the symbols of time slots n+1 to time slot n+3 are all SBFD symbols. The frequency domain range indicated by the DCI for the non-SBFD symbol(s) is FD#1, and the frequency domain range indicated for the non-SBFD symbol(s) is FD#3. It may be determined that the frequency domain range used for PDSCH#0 transmission in the non-SBFD symbol(s) of time slot n is FD#1; the frequency domain range used for PDSCH#1 transmission in the SBFD symbol(s) of time slot n+1 is FD#3, and the frequency domain range used for PDSCH#2 transmission in the SBFD symbol(s) of time slot n+2 is FD#3. The frequency domain range used for PDSCH#3 transmission in the SBFD symbol(s) of time slot n+3 is FD#3.

In some examples, if the DCI indicates a third frequency domain range for the SBFD symbol(s), a priority of using the third frequency domain range is higher than a priority of using the second frequency domain range.

In this embodiment, by determining the frequency domain range used for the PDSCH transmission in the non-SBFD symbol(s) as the first frequency domain range, and determining the frequency domain range used for the PDSCH transmission in the SBFD symbol(s) as the third frequency domain range, the frequency ranges used when receiving the PDSCH transmission on the non-SBFD symbol(s) and the SBFD symbol(s) are determined, so that the UE may receive the PDSCH transmission at the correct position, thereby improving reliability of the PDSCH transmission. In addition, the number of PDSCHs for which the reception is canceled in multiple PDSCH transmissions may be reduced as much as possible, so that the number of received PDSCH transmissions in multiple PDSCH transmissions may be increased, thereby improving downlink throughput; and further the number of times of receiving multiple repetitions of the same PDSCH may be increased, thereby increasing downlink coverage.

In some embodiments, when a first condition is met, the target frequency domain range is a fourth frequency domain range, in which the first condition includes: a bandwidth used for a DL transmission in the one or more SBFD symbols is greater than or equal to a bandwidth of the first frequency domain range.

In this embodiment, for any time slot, if the one or more symbols used for the PDSCH transmission in the time slot include one or more non-SBFD symbols, the frequency domain range used for the PDSCH transmission in the one or more non-SBFD symbols of the time slot is determined to be the first frequency domain range (for example, FD#1); if the one or more symbols used for the PDSCH transmission in the time slot include one or more SBFD symbols, when the first condition is met, the frequency domain range used for the PDSCH transmission in the one or more SBFD symbols of the time slot may be determined to be the fourth frequency domain range (for example, FD#4). In this way, FD adaptation of the PDSCH on the SBFD symbol(s) and the non-SBFD symbol(s) may be achieved, and since the frequency ranges used for receiving the PDSCH transmission on the non-SBFD symbol(s) and the SBFD symbol(s) are determined, the UE may receive the PDSCH transmission at the correct position, thereby improving reliability of the PDSCH transmission.

In this embodiment, when the bandwidth used in the SBFD symbol is greater than or equal to the bandwidth in the non-SBFD symbol, the frequency domain range used for the PDSCH transmission in the SBFD symbol(s) is determined to be the fourth frequency domain range, which may improve performance of the PDSCH transmission in the SBFD symbol(s), thereby improving reliability of the PDSCH transmission. In addition, since no additional signaling is required to indicate the frequency domain range of the PDSCH transmission in the SBFD symbol(s), the implementation is simple, the complexity is low, and the signaling overhead is reduced.

It can be understood that when the first condition is met, the bandwidth used for the DL transmission in the SBFD symbol(s) is greater than or equal to the bandwidth of the first frequency domain range. In this case, there will be a certain frequency domain range in the SBFD symbol(s), and the bandwidth used for the DL transmission contained in the frequency domain range is equal to the bandwidth of the first frequency domain range, that is, there will be a fourth frequency domain range in the SBFD symbol(s).

In some embodiments, the number of RBs included in the fourth frequency domain range is equal to the number of RBs included in the first frequency domain range, and the fourth frequency domain range is a frequency domain range where the fifth frequency domain range overlaps with the frequency domain range used for the DL transmission in the SBFD symbol(s), in which a starting RB of the fifth frequency domain range is a starting RB in the BWP, or an ending RB of the fifth frequency domain range is an ending RB in the BWP.

In some examples, the fourth frequency domain range may be the same as the fifth frequency domain range.

With reference to FIG. 6d , time slot n is a DL time slot, and symbols of time slot n are all non-SBFD symbols; time slot n+1 to time slot n+3 are all SBFD time slots, and symbols of time slot n+1 to time slot n+3 are all SBFD symbols. The frequency domain range indicated by the DCI for the non-SBFD symbol(s) is FD#1, so it may be determined that the frequency domain range used for PDSCH#0 transmission in the non-SBFD symbol(s) of time slot n is FD#1. If the bandwidth used for the DL transmission in the SBFD symbol(s) of time slot n+1 to time slot n+3 is greater than or equal to the bandwidth of FD#1, since the number of RBs included in FD#1 is equal to the number of RBs included in FD#4, the starting RB of the fifth frequency domain range (for example, FD#1_1) is the starting RB in the BWP, and FD#4 is the frequency domain range where FD#1_1 overlaps with the frequency domain range used for the DL transmission in the SBFD symbol(s), it may be determined that FD#4 is the same as FD#1_1, that is, the frequency domain range used for PDSCH#1 transmission in the SBFD symbol(s) of time slot n+1 is FD#4, and the frequency domain range used for PDSCH#2 transmission in the SBFD symbol(s) of time slot n+2 is FD#4. The frequency domain range used for PDSCH#3 transmission in the SBFD symbol(s) of time slot n+3 is FD#4.

In some other examples, the fourth frequency domain range may be different from the fifth frequency domain range.

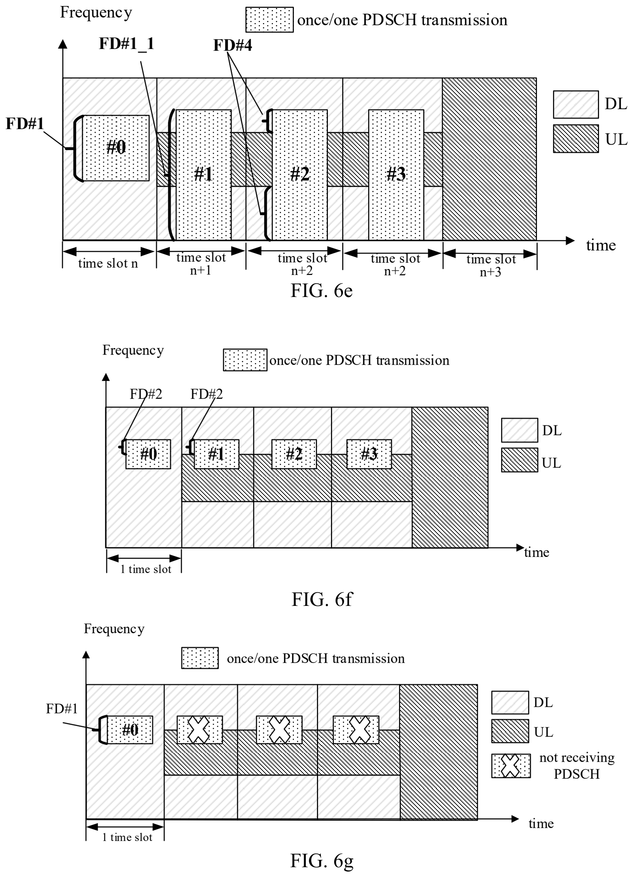

With reference to FIG. 6e , time slot n is a DL time slot, and symbols of time slot n are all non-SBFD symbols; time slot n+1 to time slot n+3 are all SBFD time slots, and symbols of time slot n+1 to time slot n+3 are all SBFD symbols. The frequency domain range indicated by the DCI for the non-SBFD symbol(s) is FD#1, so it may be determined that the frequency domain range used for PDSCH#0 transmission in the non-SBFD symbol(s) of time slot n is FD#1. If the bandwidth used for the DL transmission in the SBFD symbol(s) of time slot n+1 to time slot n+3 is greater than or equal to the bandwidth of FD#1, since the number of RBs included in FD#1 is equal to the number of RBs included in FD#4, a starting RB of the fifth frequency domain range (for example, FD#1_1) is a starting RB in the BWP, and FD#4 is the frequency domain range where FD#1_1 overlaps with the frequency domain range used for the DL transmission in the SBFD symbol(s), it may be determined that FD#4 is different from FD#1_1, that is, the frequency domain range used for PDSCH#1 transmission in the SBFD symbol(s) of time slot n+1 is FD#4, and the frequency domain range used for PDSCH#2 transmission in the SBFD symbol(s) of time slot n+2 is FD#4. The frequency domain range used for PDSCH#3 transmission in the SBFD symbol(s) of time slot n+3 is FD#4.

For example, if FD#1 includes RB#10 to RB#20, FD#1_1 includes RB#0 to RB#21, and it may be determined that FD#4 includes RB#0 to RB#8 and RB#20 to RB#21.

In some examples, if the DCI indicates a third frequency domain range for the SBFD symbol(s), a priority of using the third frequency domain range is higher than a priority of using the fourth frequency domain range.

In this embodiment, it is determined that the frequency domain range used for the PDSCH transmission in the SBFD symbol(s) is the fourth frequency domain range, since the number of RBs included in the fourth frequency domain range is equal to the number of RBs included in the first frequency domain range, the fourth frequency domain range is the frequency domain range where the fifth frequency domain range overlaps with the frequency domain range used for the DL transmission in the SBFD symbol(s), and the starting RB of the fifth frequency domain range is the starting RB in the BWP, or the ending RB of the fifth frequency domain range is the ending RB in the BWP, the frequency range used when receiving the PDSCH transmission on the SBFD symbol(s) is determined, so that the UE may receive the PDSCH transmission at the correct position, thereby improving reliability of the PDSCH transmission in the SBFD symbol(s). In addition, the number of PDSCHs for which reception is canceled in multiple PDSCH transmissions may be reduced as much as possible, so that the number of received PDSCH transmissions in the multiple PDSCH transmissions may be increased, thereby improving downlink throughput; and further the number of times that the same PDSCH is received for multiple repetitions may also be increased, thereby increasing downlink coverage.

In some embodiments, the method may further include:
for any time slot, in a case where the one or more symbols used for the PDSCH transmission in the time slot include one or more SBFD symbols and the first condition is not met, determining not to receive the PDSCH in the time slot.

In this embodiment, in a time slot, the one or more symbols where the PDSCH transmission is located include at least one SBFD symbol, and the bandwidth used for the DL transmission in the at least one SBFD symbol is smaller than the bandwidth of the first frequency domain range, the PDSCH in the time slot is not received, which may be implemented easily and avoid the additional complex design due to the need to ensure the performance of receiving the PDSCH.

It can be understood that when the first condition is not met, the bandwidth used for the DL transmission in the SBFD symbol(s) is smaller than the bandwidth of the first frequency domain range. In this case, the fourth frequency domain range and the fifth frequency domain range do not exist in the SBFD symbol(s), so that the fourth frequency domain range is a frequency domain range where the fifth frequency domain range overlaps with the frequency domain range used for the DL transmission in the SBFD symbol(s), and the bandwidth for the DL transmission contained in the fourth frequency domain range is equal to the bandwidth of the first frequency domain range.

In some embodiments, in the above step S102, determining the frequency domain range used for the PDSCH transmission on the one or more symbols used for the PDSCH transmission in each time slot according to the DCI may include:
in a case where one or more symbols used for the PDSCH transmission in at least one time slot include one or more non-SBFD symbols, determining a frequency domain range used for the PDSCH transmission in each time slot to be a first frequency domain range, in which the first frequency domain range is a frequency domain range indicated by the DCI for the one or more non-SBFD symbols.

In this embodiment, when the one or more symbols used for the PDSCH transmission in at least one time slot include one or more non-SBFD symbols, the frequency domain ranges used for the PDSCH transmission in all time slots may be uniformly determined as the first frequency domain range indicated by the DCI for the one or more non-SBFD symbols.

In this embodiment, by determining the frequency domain range used for the PDSCH transmission in each time slot as the first frequency domain range, the frequency ranges used for receiving the non-SBFD symbol(s) and the SBFD symbol(s) are determined, so that the UE may receive the PDSCH transmission at the correct position, thereby improving reliability of the PDSCH transmission. Further, no signaling is needed to separately indicate the frequency domain range of the PDSCH transmission in the SBFD symbol(s), which is simple to implement, has a low complexity, and reduces signaling overhead.

In some embodiments, in the above step S102, determining the frequency domain range used for the PDSCH transmission on the one or more symbols used for the PDSCH transmission in each time slot according to the DCI may include:
in a case where one or more symbols used for the PDSCH transmission in at least one time slot include one or more SBFD symbols, determining the frequency domain range used for the PDSCH transmission in each time slot to be a second frequency domain range, in which the second frequency domain range is a frequency domain range that the first frequency domain range overlaps with the DL frequency domain range in the one or more SBFD symbols.

In this embodiment, when the one or more symbols used for the PDSCH transmission in at least one time slot include one or more SBFD symbols, the frequency domain ranges used for the PDSCH transmission in all time slots may be uniformly determined as the second frequency domain range (for example, FD#2), that is, the frequency domain range used for the PDSCH transmission in each time slot is the frequency domain range that the first frequency domain range overlaps with the DL frequency domain range in the one or more SBFD symbols.

With reference to FIG. 6f, the symbols used for the PDSCH transmission in the DL time slot are non-SBFD symbols, and the symbols used for the PDSCH transmission in the SBFD time slot are SBFD symbols. The frequency domain ranges used for the PDSCH transmission in all time slots may be uniformly determined as FD#2.

In this embodiment, by determining the frequency domain range used for the PDSCH transmission in each time slot as the second frequency domain range, the frequency ranges used for receiving the non-SBFD symbol(s) and the SBFD symbol(s) are determined, so that the UE may receive the PDSCH transmission at the correct position, thereby improving reliability of the PDSCH transmission. Further, no signaling is needed to separately indicate the frequency domain range of the PDSCH transmission in the SBFD symbol(s), which is simple to implement, has a low complexity, and reduces signaling overhead.

In some embodiments, the method further comprises:
for any time slot, in a case where the frequency domain range used for the PDSCH transmission in the time slot is determined as the first frequency domain range one or more symbols used for the PDSCH transmission in the time slot include one or more SBFD symbols, and the first frequency domain range and the non-DL frequency domain range in the one or more SBFD symbols have an overlapping frequency domain range, determining no to receive the PDSCH in the time slot.

Here, determining not to receive the PDSCH in the time slot may include determining to cancel receiving the PDSCH in the time slot.

In this embodiment, if the one or more symbols used for the PDSCH transmission in the time slot includes one or more SBFD symbols, and it is determined that the first frequency domain range used for the PDSCH transmission in the time slot has a frequency domain range overlapped with the non-DL frequency domain range in the one or more SBFD symbols, the PDSCH in the time slot is not received, which is simple to implement and avoids the additional complex design due to the need to ensure the performance of receiving PDSCH, and makes up for the deficiency in the prior art of lacking a method of determining whether the PDSCH transmission on the one or more SBFD symbols is received.

Referring to FIG. 6g, if the frequency domain range for the PDSCH transmission in a certain SBFD time slot is determined to be FD#1, when the one or more symbols for the PDSCH transmission in the SBFD time slot include one or more SBFD symbols, the PDSCH in the SBFD time slot is not received.

In some embodiments, the first information includes an information field. If a value of the information field is a first bit value, the first information is used to indicate that multiple PDSCH transmissions can use SBFD symbols and non-SBFD symbols, and any one of the multiple PDSCH transmissions can use one or more SBFD symbols or one or more non-SBFD symbols.

Alternatively, if the value of the information field is a second bit value, the first information is used to indicate that multiple PDSCH transmissions can use SBFD symbols and non-SBFD symbols, and any one of the multiple PDSCH transmissions can use one or more SBFD symbols and one or more non-SBFD symbols.

Alternatively, if the value of the information field is a third bit value, the first information is used to indicate that multiple PDSCH transmissions can use SBFD symbols, and any one of the multiple PDSCH transmissions can use one or more SBFD symbols.

Alternatively, if the value of the information field is a fourth bit value, the first information is used to indicate that multiple PDSCH transmissions can use non-SBFD symbols, and any one of the multiple PDSCH transmissions can use one or more non-SBFD symbols.

In some examples, the information field includes several bits, such as two bits.

In some examples, the first bit value is "00", or the second bit value is "01", or the third bit value is "10", or the fourth bit value is "11".

In this embodiment, the content indicated by the first information may be determined by the value of the information field of the first information. Different values enable the first information to clearly indicate the symbols usable for multiple PDSCH transmissions, as well as the symbols usable for any one of the multiple PDSCH transmissions. Since the usable symbols can be clearly determined, multiple PDSCH transmissions will be more reliable.

In some embodiments, the method further comprises at least one of the following:
for any time slot, in a case where one or more symbols where the PDSCH in the time slot is located include at least one UL symbol or include both SBFD and non-SBFD symbols, determining not to receive the PDSCH in the time slot, in which the value of the information field is the first bit value;
for any time slot, in a case where one or more symbols where the PDSCH in the time slot is located include at least one UL symbol, determining not to receive the PDSCH in the time slot, in which the value of the information field is the second bit value;
for any time slot, in a case where one or more symbols where the PDSCH in the time slot is located include at least one non-SBFD symbol, determining not to receive the PDSCH in the time slot, in which the value of the information field is the third bit value; or
for any time slot, in a case where one or more symbols where the PDSCH in the time slot is located include at least one SBFD symbol or UL symbol, determining not to receive the PDSCH in the time slot, in which the value of the information field is the fourth bit value.

In this embodiment, whether to receive the PDSCH in each time slot may be determined by determining the symbols usable for multiple PDSCH transmissions and for any PDSCH transmission and indicated by the value of the information field of the first information, combined with the symbols where the PDSCH in each time slot is actually located, which is simple to implement, avoids the additional complex design due to the need to ensure the performance of receiving PDSCH, and allows the UE to receive the PDSCH transmission at the correct location, thereby improving reliability of the PDSCH transmission.

In some embodiments, the PDSCH in the plurality of time slots includes at least one of the following:
a retransmitted PDSCH;
an SPS PDSCH which is not retransmitted; or
multiple PDSCHs scheduled by a single DCI.

In some examples, the plurality of PDSCHs are multiple PDSCHs in one or more PDSCH sets in which the SPS PDSCH is retransmitted.

In this embodiment, the repetitions of each PDSCH may be called a set (group) of PDSCHs. There are multiple groups of PDSCHs in the SPS PDSCH with repetition. The categories of symbols where PDSCHs in different groups may be different. For example, the PDSCHs of Group#1 are in the non-SBFD symbols, and the symbols where the PDSCHs of Group#2 are located include the SBFD symbols.

In some examples, for the SPS PDSCH with repetition, multiple PDSCHs refer to multiple PDSCHs in one group.

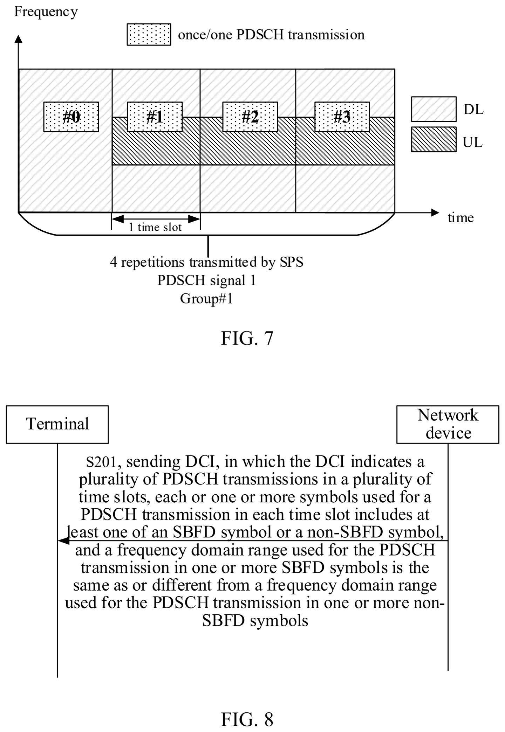

With reference to FIG. 7, for the SPS PDSCH with repetition, one SPS PDSCH is retransmitted for four times to form one group, which includes PDSCH#0 to PDSCH#3. One or more symbols where PDSCH#0 is located include one or more non-SBFD symbols, and the symbols where PDSCH#1 to PDSCH#3 are transmitted are SBFD symbols.

In some other examples, for the SPS PDSCH with repetition, the multiple PDSCHs refer to multiple PDSCHs in all groups.

In this embodiment, a PDSCH in multiple time slots indicated by the DCI may include the retransmitted PDSCH, the SPS PDSCH without repetition, or multiple PDSCHs scheduled by a single DCI, thereby making the solution provided by the embodiment of the present disclosure suitable for different application scenarios.

The embodiment can be combined with any other embodiments without contradiction; any solutions (or optional solutions) in this embodiment may be combined with each other without contradiction; any solution in this embodiment may be combined with any solution in other embodiments without contradiction; the steps in this embodiment may be exchanged in order without contradiction.

The following information processing method is performed by a network device, which is similar to the description of the information processing method performed by the terminal mentioned above; and for technical details and technical effects not disclosed in the embodiments of the information processing method performed by the network device, reference may be made to the description of the examples of the information processing method performed by the terminal, and no detailed description is given here.

FIG. 8 is a flowchart of an information processing method according to an embodiment. The information processing method is performed by a network device, as shown in FIG. 8, and the information processing method may include the following steps.

At step S201, DCI is sent, in which the DCI indicates a plurality of PDSCH transmissions in a plurality of time slots, each or one or more symbols used for a PDSCH transmission in each time slot includes at least one of an SBFD symbol or a non-SBFD symbol, and a frequency domain range used for the PDSCH transmission in one or more SBFD symbols is the same as or different from a frequency domain range used for the PDSCH transmission in one or more non-SBFD symbols.

In some examples, the information processing method may be performed by the network device, which may be a base station, and the base station may be a gNB.

In some examples, the network device sends the DCI to a terminal. The terminal may be various mobile terminals or fixed terminals, such as including, but not limited to, mobile phones, wearable devices, IoT devices, etc.

In some examples, the PDSCH transmission is used for transmission of downlink data, such as transmission of unicast data, paging signals, random access response messages, or other data.

In some examples, the plurality of PDSCH transmissions indicated by the DCI may be multiple different PDSCH transmissions or multiple repetitions of the same PDSCH.

In some examples, the DCI is used to instruct the terminal to receive the PDSCH in multiple time slots, for example, the DCI is used to instruct the terminal to perform PDSCH repetitions in multiple time slots, SPS PDSCH with or without repetition, or to instruct the terminal to receive multiple PDSCH transmissions scheduled by a single DCI.

In some examples, the DCI may be used to indicate time domain resource information used for the PDSCH transmission.

For example, the time domain resource information includes information such as a time slot position, a starting symbol position in the time slot, a time domain length, etc. The time domain length can be used to indicate the number of consecutive symbols allocated to the PDSCH, counting from the starting symbol position.

For example, time domain resource allocation information of the DCI includes a row index, and the row index is used by the terminal to search for the time domain resource information used for the PDSCH transmission from a pre-configured time domain resource allocation table.

In some examples, the DCI may be used to indicate a symbol position occupied by the PDSCH within each of the plurality of time slots.

In some examples, the symbols in one time slot may be all SBFD symbols, or all non-SBFD symbols, or may include both SBFD and non-SBFD symbols.

In some examples, the SBFD symbol is a symbol that includes both a DL subband and a UL subband in the frequency domain, and the non-SBFD symbol is a symbol that does not include both a DL subband and a UL subband in the frequency domain. For example, the non-SBFD symbol is a DL symbol or a UL symbol or an F symbol.

In some examples, the DCI may indicate the plurality of PDSCH transmissions based on mini-slot scheduling. A mini-slot may consist of some consecutive symbols in one time slot. For example, a length of a downlink mini-slot may be 2, 4 or 7 symbols, and the mini-slot may start at any symbol in a time slot.

In some examples, the symbols used for the PDSCH transmissions in the plurality of time slots may be notified to the terminal by the network through higher-layer signaling or physical layer signaling. For example, the physical layer signaling includes the DCI.

In some examples, the symbols used for the PDSCH transmissions in the plurality of time slots include SBFD symbols and/or non-SBFD symbols.

For example, all symbols used for the PDSCH transmission in one time slot are non-SBFD symbols; or, all symbols used for the PDSCH transmission in one time slot are SBFD symbols; or, the symbols used for the PDSCH transmission in one time slot include SBFD symbols and non-SBFD symbols.

In some examples, types of symbols used for PDSCH transmissions in different time slots may be the same or different, for example, the symbols used for the PDSCH transmission in time slot n are all non-SBFD symbols, the symbols used for the PDSCH transmission in time slot n+1 are all SBFD symbols, and the symbols used for the PDSCH transmission in time slot n+2 include SBFD symbols and non-SBFD symbols.

In some examples, a frequency domain range used for the PDSCH transmission in SBFD symbols is the same as or different from a frequency domain range used for the PDSCH transmission in non-SBFD symbols.

In some examples, the DCI may be used to indicate the frequency domain range used for the PDSCH transmission in the non-SBFD symbols. For example, an FDRA (Frequency Domain Resource Allocation) field in the DCI indicates that the frequency domain range used for the PDSCH transmission in the non-SBFD symbols is a first frequency domain range.

In some examples, the frequency domain range of the PDSCH transmission is used to indicate a frequency domain position occupied by the PDSCH transmission.

In some examples, the frequency domain range may be characterized by a resource grid (RG), a bandwidth part (BWP), a physical resource block (PRB) and/or a resource block (RB).

In some examples, in the SBFD symbol(s), a frequency domain range usable for a DL transmission is called a DL frequency domain range, and a frequency domain range that cannot be used for the DL transmission is called a non-DL frequency domain range.

In some examples, the DL frequency domain range may be a frequency domain range where a DL subband overlaps with a BWP.

In some other examples, the DL frequency domain range may be a frequency domain range where the DL subband and the GB overlap with the BWP.

In some examples, the frequency domain range used for the PDSCH transmission in the SBFD symbol(s) is a second frequency domain range, and the second frequency domain range may be a frequency domain range where a first frequency domain range indicated by the DCI overlaps with the DL frequency domain range in the SBFD symbol(s).

In the information processing method provided in the embodiments of the present disclosure, by sending the DCI which is used to indicate multiple PDSCH transmissions in multiple time slots; and determining, according to the DCI, the frequency domain range used for the PDSCH transmission on one or more symbols used for the PDSCH transmission in each time slot, in which the symbol includes at least one of an SBFD symbol or a non-SBFD symbol, the frequency domain range on the one or more SBFD symbols and the one or more non-SBFD symbols where the PDSCH transmission is located can be clearly determined, thereby improving reliability of the PDSCH transmission and making up for the deficiency in the prior art of lacking a method of determining the frequency domain range of the PDSCH transmission in the SBFD symbol(s).

In some embodiments, the method may further include:
sending first information; in which the first information indicates at least one of:
a category of symbols usable for the plurality of PDSCH transmissions; or
a category of symbols usable for any one of the plurality of PDSCH transmissions.

In this embodiment, by sending the first information which clearly indicates at least one of the category of symbols usable for multiple PDSCH transmissions or the category of symbols usable for any one of the multiple PDSCH transmissions, the category of symbols usable for the PDSCH transmission can be clearly determined, thereby improving the reliability of performing the multiple PDSCH transmissions compared to the situation where the symbol category is uncertain.

In some embodiments, the first information indicates at least one of the following:
the plurality of PDSCH transmissions being capable of using SBFD symbols and non-SBFD symbols, and any one of the plurality of PDSCH transmissions being capable of using one or more SBFD symbols or one or more non-SBFD symbols;
the plurality of PDSCH transmissions being capable of using SBFD symbols and non-SBFD symbols, and any one of the plurality of PDSCH transmissions being capable of using one or more SBFD symbols and one or more non-SBFD symbols;
the plurality of PDSCH transmissions being capable of using SBFD symbols, and any one of the plurality of PDSCH transmissions being capable of using one or more SBFD symbols; or
the plurality of PDSCH transmissions being capable of using non-SBFD symbols, and any one of the plurality of PDSCH transmissions being capable of using one or more non-SBFD symbols.

In this embodiment, the first information clearly indicates symbols usable for the multiple PDSCH transmissions and symbols usable for any one of the multiple PDSCH transmissions, so that the multiple PDSCH transmissions are more reliable.

In some embodiments, sending the first information may include:
sending the first information through a first message, in which the first message includes at least one of a DCI message, a radio resource control (RRC) message, a media access control (MAC) control element (CE) message, and a system information block (SIB).

In some embodiments the first information is sent to the terminal through a DCI message.

In some embodiments, the first information is sent to the terminal through an RRC message.

In some embodiments, the first information is sent to the terminal through a MAC CE message.

In some embodiments, the first information is sent to the terminal through a SIB1 message.

In this embodiment, the first information may be sent by multiplexing the messages in the communication process, which can reduce signaling overhead, reduce resource consumption, and improve resource utilization efficiency.

In some embodiments, for any time slot, in a case where one or more symbols used for the PDSCH transmission in the time slot include one or more non-SBFD symbols, the frequency domain range used for the PDSCH transmission in the time slot as a first frequency domain range, in which the first frequency domain range is a frequency domain range indicated by the DCI for the one or more non-SBFD symbols;
and/or for any time slot, in a case where one or more symbols used for the PDSCH transmission in the time slot include one or more SBFD symbols, the frequency domain range used for the PDSCH transmission in the time slot as a target frequency domain range.

In some examples, the FDRA field in the DCI indicates that the frequency domain range used for the PDSCH transmission in the one or more non-SBFD symbols is the first frequency domain range.

In some examples, the target frequency domain range may be the same as or different from the first frequency domain range.

In some embodiments, the target frequency domain range is a second frequency domain range, in which the second frequency domain range is a frequency domain range where the first frequency domain range overlaps with a DL frequency domain range in the one or more SBFD symbols.

In this embodiment, for any time slot, if the one or more symbols used for the PDSCH transmission in the time slot include one or more non-SBFD symbols, the frequency domain range used for the PDSCH transmission in the one or more non-SBFD symbols of the time slot is determined to be the first frequency domain range (for example, FD#1); if the one or more symbols used for the PDSCH transmission in the time slot include one or more SBFD symbols, the frequency domain range used for the PDSCH transmission in the one or more SBFD symbols of the time slot is determined to be the second frequency domain range (for example, FD#2).

In some examples, for any time slot, the one or more symbols used for the PDSCH transmission in the time slot include only one or more SBFD symbols or one or more non-SBFD symbols. The frequency domain range used for the PDSCH transmission in the one or more non-SBFD symbols is the first frequency domain range, and the frequency domain range used for the PDSCH transmission in the one or more SBFD symbols is the second frequency domain range.

In other examples, the symbols used for the PDSCH transmission in a certain time slot may include the SBFD symbol(s) or the non-SBFD symbol(s). The frequency domain range used for the PDSCH transmission in the non-SBFD symbol(s) is the first frequency domain range, and the frequency domain range used for the PDSCH transmission in the SBFD symbol(s) is the second frequency domain range.

In some embodiments, the target frequency domain range is a third frequency domain range, in which the third frequency domain range is a frequency domain range indicated by the DCI for the SBFD symbol(s).

In this embodiment, for any time slot, if the symbol(s) used for the PDSCH transmission in the time slot includes the non-SBFD symbol(s), the frequency domain range used for the PDSCH transmission in the non-SBFD symbol(s) of the time slot is determined to be the first frequency domain range (for example, FD#1); if the symbol(s) used for the PDSCH transmission in the time slot includes SBFD symbol, the frequency domain range used for the PDSCH transmission in the SBFD symbol(s) of the time slot is determined to be the third frequency domain range (for example, FD#3).

For example, the DCI includes two FDRAs, and the two FDRAs respectively indicate FD#1 and FD#3, FD#1 is used for the non-SBFD symbol(s), and FD#3 is used for the SBFD symbol(s).

In some embodiments, if the DCI indicates a third frequency domain range for the SBFD symbol(s), a priority of using the third frequency domain range is higher than a priority of using the second frequency domain range.

In some embodiments, when a first condition is met, the target frequency domain range is a fourth frequency domain range, in which the first condition includes: a bandwidth used for a DL transmission in the one or more SBFD symbols is greater than or equal to a bandwidth of the first frequency domain range.

In this embodiment, for any time slot, if the one or more symbols used for the PDSCH transmission in the time slot include one or more non-SBFD symbols, the frequency domain range used for the PDSCH transmission in the one or more non-SBFD symbols of the time slot is determined to be the first frequency domain range (for example, FD#1); if the one or more symbols used for the PDSCH transmission in the time slot include one or more SBFD symbols, when the first condition is met, the frequency domain range used for the PDSCH transmission in the one or more SBFD symbols of the time slot may be determined to be the fourth frequency domain range (for example, FD#4). In this way, FD adaptation of the PDSCH on the SBFD symbol(s) and the non-SBFD symbol(s) may be achieved.

In some embodiments, the number of RBs included in the fourth frequency domain range is equal to the number of RBs included in the first frequency domain range, and the fourth frequency domain range is a frequency domain range where the fifth frequency domain range overlaps with the frequency domain range used for the DL transmission in the SBFD symbol(s), in which a starting RB of the fifth frequency domain range is a starting RB in the BWP, or an ending RB of the fifth frequency domain range is an ending RB in the BWP.

In some examples, the fourth frequency domain range may be the same as the fifth frequency domain range.

In some other examples, the fourth frequency domain range may be different from the fifth frequency domain range.

In some examples, if the DCI indicates a third frequency domain range for the SBFD symbol(s), a priority of using the third frequency domain range is higher than a priority of using the fourth frequency domain range.

In some embodiments, in a case where one or more symbols used for the PDSCH transmission in at least one time slot include one or more non-SBFD symbols, a frequency domain range used for the PDSCH transmission in each time slot is a first frequency domain range, in which the first frequency domain range is a frequency domain range indicated by the DCI for the one or more non-SBFD symbols.

In this embodiment, when the one or more symbols used for the PDSCH transmission in at least one time slot include one or more non-SBFD symbols, the frequency domain ranges used for the PDSCH transmission in all time slots may be uniformly determined as the first frequency domain range indicated by the DCI for the one or more non-SBFD symbols.

In some embodiments, in a case where one or more symbols used for the PDSCH transmission in at least one time slot include one or more SBFD symbols, the frequency domain range used for the PDSCH transmission in each time slot is a second frequency domain range, in which the second frequency domain range is a frequency domain range that the first frequency domain range overlaps with the DL frequency domain range in the one or more SBFD symbols.

In this embodiment, when the one or more symbols used for the PDSCH transmission in at least one time slot include one or more SBFD symbols, the frequency domain ranges used for the PDSCH transmission in all time slots may be uniformly determined as the second frequency domain range (for example, FD#2), that is, the frequency domain range used for the PDSCH transmission in each time slot is the frequency domain range that the first frequency domain range overlaps with the DL frequency domain range in the one or more SBFD symbols.

In some embodiments, the first information includes an information field. If a value of the information field is a first bit value, the first information is used to indicate that multiple PDSCH transmissions can use SBFD symbols and non-SBFD symbols, and any one of the multiple PDSCH transmissions can use one or more SBFD symbols or one or more non-SBFD symbols.

Alternatively, if the value of the information field is a second bit value, the first information is used to indicate that multiple PDSCH transmissions can use SBFD symbols and non-SBFD symbols, and any one of the multiple PDSCH transmissions can use one or more SBFD symbols and one or more non-SBFD symbols.

Alternatively, if the value of the information field is a third bit value, the first information is used to indicate that multiple PDSCH transmissions can use SBFD symbols, and any one of the multiple PDSCH transmissions can use one or more SBFD symbols.

Alternatively, if the value of the information field is a fourth bit value, the first information is used to indicate that multiple PDSCH transmissions can use non-SBFD symbols, and any one of the multiple PDSCH transmissions can use one or more non-SBFD symbols.

In some examples, the information field includes several bits, such as two bits.

In some examples, the first bit value is "00", or the second bit value is "01", or the third bit value is "10", or the fourth bit value is "11".

In this embodiment, the content indicated by the first information may be determined by the value of the information field of the first information. Different values enable the first information to clearly indicate the symbols usable for multiple PDSCH transmissions, as well as the symbols usable for any one of the multiple PDSCH transmissions. Since the usable symbols can be clearly determined, multiple PDSCH transmissions will be more reliable.

In some embodiments, the PDSCH in the plurality of time slots includes at least one of the following:
a retransmitted PDSCH;
an SPS PDSCH which is not retransmitted; or
multiple PDSCHs scheduled by a single DCI.

In some examples, the plurality of PDSCHs are multiple PDSCHs in one or more PDSCH sets in which the SPS PDSCH is retransmitted.

In this embodiment, the repetitions of each PDSCH may be called a set (group) of PDSCHs. There are multiple groups of PDSCHs in the SPS PDSCH with repetition. The categories of symbols where PDSCHs in different groups may be different. For example, the PDSCHs of Group#1 are in the non-SBFD symbols, and the symbols where the PDSCHs of Group#2 are located include the SBFD symbols.

In some examples, for the SPS PDSCH with repetition, the multiple PDSCHs refer to multiple PDSCHs in one group.

In some other examples, for the SPS PDSCH with repetition, the multiple PDSCHs refer to multiple PDSCHs in all groups.

In this embodiment, a PDSCH in the multiple time slots indicated by the DCI may include a retransmitted PDSCH, the SPS PDSCH without repetition, or multiple PDSCHs scheduled by a single DCI, thereby making the solution provided by the embodiment of the present disclosure suitable for different application scenarios.

The embodiment can be combined with any other embodiments without contradiction; any solutions (or optional solutions) in this embodiment may be combined with each other without contradiction; any solution in this embodiment may be combined with any solution in other embodiments without contradiction; the steps in this embodiment may be exchanged in order without contradiction.

In order to further explain any embodiment of the present disclosure, several specific embodiments are provided below.

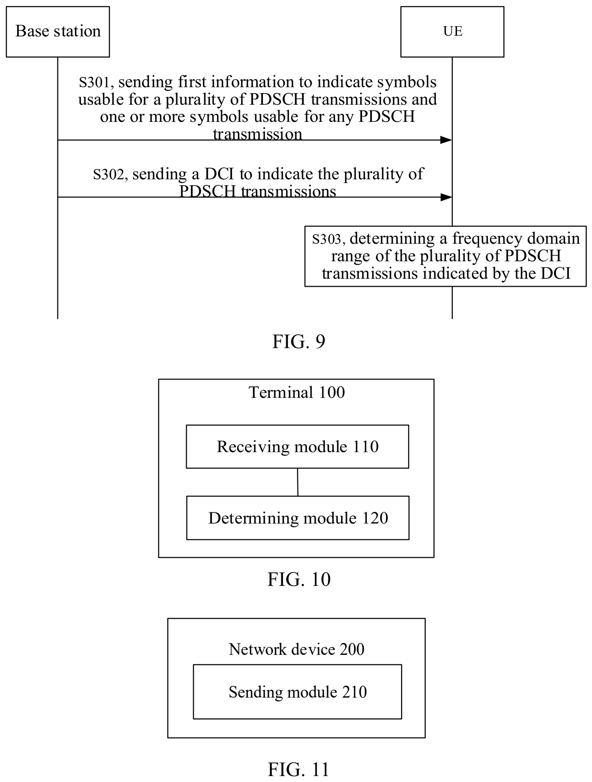

FIG. 9 is an interactive schematic diagram of an information processing method according to an embodiment of the present disclosure. As shown in FIG. 9, the information processing method may include the following steps.

At step S301, a base station sends first information to indicate symbols usable for a plurality of PDSCH transmissions and one or more symbols usable for any PDSCH transmission.

In some embodiments, the UE receives the first information. When one DCI indicates multiple PDSCH transmissions, the first information indicates the symbols usable for the multiple PDSCH transmissions and the one or more symbols usable for any PDSCH transmission.

At step S302, the base station sends a DCI to indicate the plurality of PDSCH transmissions.

In some embodiments, the UE receives the DCI indicating multiple PDSCH transmissions.

At step S303, the UE determines a frequency domain range of the plurality of PDSCH transmissions indicated by the DCI.

The frequency domain range on one or more non-SBFD symbol(s) indicated by a frequency domain resource allocation (FDRA) field in the DCI is FD#1. In one or more SBFD symbol(s), a frequency domain range usable for a DL transmission is called a DL frequency domain range, and a frequency domain range unusable for the DL transmission is called a non-DL frequency domain range. FD#2 is a frequency domain range where FD#1 overlaps with the DL frequency domain range.

In some examples, the DL frequency domain range is a frequency domain range where a DL subband overlaps with a BWP.

In some other examples, the DL frequency domain range is a frequency domain range where a DL subband and a GB overlap with a BWP.

In some examples, the UE determines a frequency domain range used by multiple PDSCHs scheduled by a DCI on SBFD symbols and non-SBFD symbols.

In some examples, the UE determines a frequency domain range used by multiple PDSCHs scheduled by a DCI on SBFD symbols or non-SBFD symbols.

In some embodiments, the first information indicates at least one of the following:
the plurality of PDSCH transmissions being performed on both SBFD symbols and non-SBFD symbols, and any one of the plurality of PDSCH transmissions being performed on one or more SBFD symbols or one or more non-SBFD symbols;
the plurality of PDSCH transmissions being performed on both SBFD symbols and non-SBFD symbols, and any one of the plurality of PDSCH transmissions being performed on one or more SBFD symbols and one or more non-SBFD symbols;
the plurality of PDSCH transmissions being performed on SBFD symbols only, and any one of the plurality of PDSCH transmissions being performed on one or more SBFD symbols; or
the plurality of PDSCH transmissions being performed on non-SBFD symbols only, and any one of the plurality of PDSCH transmissions being performed on one or more non-SBFD symbols.

In some embodiments, the first information indicates that multiple PDSCH transmissions can be performed on both SBFD symbols and non-SBFD symbols, and any PDSCH transmission can only be performed on one or more SBFD symbols or one or more non-SBFD symbols, and one or more of solutions 3-1 to 3-5 are performed.

Solution 3-1: in a time slot, one or more symbols where the PDSCH is located include one or more non-SBFD symbols, FD uses FD#1; while one or more symbols where the PDSCH is located include one or more SBFD symbols, FD uses FD#2.

Solution 3-2: in all time slots, the PDSCH uses FD#1. In a time slot, if one or more symbols where the PDSCH is located include at least one SBFD symbol, and FD#1 indicated by DCI overlaps with the DL frequency domain range, the PDSCH in the time slot is not received.

Solution 3-3: at least one of the symbols included in multiple PDSCHs indicated by the DCI is the SBFD symbol. In all time slots, FD of the PDSCH uses FD#2.

Solution 3-4: the DCI includes two FDRA fields, indicating FD#1 and FD#3, which are used for non-SBFD symbols and SBFD symbols respectively.

In a time slot, one or more symbols where the PDSCH is located include one or more non-SBFD symbols, FD uses FD#1; one or more symbols where the PDSCH is located include one or more SBFD symbols, FD uses FD#3.

Scheme 3-5: FD adaptation of the PDSCH on the SBFD symbol(s) and the non-SBFD symbol(s).

In a time slot, when one or more symbols where the PDSCH is located include one or more non-SBFD symbols, FD uses FD#1; when one or more symbols where the PDSCH is located include one or more SBFD symbols and condition 0 is met, FD uses FD#4.

In some examples, condition 0 includes that: the bandwidth available for the DL transmission in the one or more SBFD symbols is greater than or equal to the bandwidth of FD#1.

In some examples, the number of RBs contained in FD#4 used by the SBFD symbol(s) is equal to the number of RBs of FD#1, and FD#4 is a portion where FD#1-1 overlaps with the frequency domain range usable for the DL transmission.

In some examples, a starting RB of FD#1-1 is a starting RB in the BWP.

In some examples, an ending RB of FD#1-1 is an ending RB in the BWP.

In some examples, in a time slot, the one or more symbols where the PDSCH is located include the SBFD symbol(s), and condition 0 is not met, the PDSCH is not received.

In some embodiments, the first information indicates that multiple PDSCH transmissions can be performed on both SBFD symbols and non-SBFD symbols, and any PDSCH transmission can be performed on one or more SBFD symbols or non-SBFD symbols, and one or more of the above solutions 3-1 to 3-5 is performed, and condition 1 is considered.

Condition 1 includes that: one or more symbols where the PDSCH transmission is located include at least one UL symbol or include both SBFD and non-SBFD symbols, and the PDSCH in the time slot is not received.

In some examples, the first information indicates that multiple PDSCH transmissions can be performed on both SBFD symbols and non-SBFD symbols, and any PDSCH transmission can be performed on one or more SBFD symbols and one or more non-SBFD symbols, and one or more of the above-mentioned solutions 3-1 to 3-5 are applied, and condition 2 is considered.

Condition 2 includes that: one or more symbols where the PDSCH transmission is located include at least one UL symbol, the PDSCH in the time slot is not received.

In some embodiments, the first information indicates that multiple PDSCH transmissions are only performed on the SBFD symbols, any PDSCH transmission can only be performed on one or more SBFD symbols, and solution 3-6 is performed.

Solution 3-6: the PDSCH uses FD#2. In a time slot, one or more symbols where the PDSCH is located include at least one non-SBFD symbol, and the PDSCH in the time slot is not received.

In some embodiments, the first information indicates that multiple PDSCH transmissions are only performed on non-SBFD symbols, any PDSCH transmission can only be performed on one or more non-SBFD symbols, and solution 3-7 is performed.

Solution 3-7: the PDSCH uses FD#1. In a time slot, one or more symbols where PDSCH is located include at least one SBFD symbol or UL symbol, and the PDSCH in the time slot is not received.

The information processing method provided by the embodiments of the present disclosure may be applied to the PDSCH repetition, the SPS PDSCH without repetition, or multiple PDSCHs scheduled by a single DCI.

For the SPS PDSCH with repetition, repetitions of each PDSCH may be called a group of PDSCHs. There are multiple groups of PDSCHs in the SPS PDSCH with repetition. The categories of symbols where PDSCHs in different groups are located may be different. For example, the PDSCH of Group#1 is on one or more non-SBFD symbol, and the PDSCH of Group#2 is on one or more SBFD symbols.

Option 1: for the SPS PDSCH with repetition, multiple PDSCHs refer to multiple PDSCHs in one group.

Option 2: for SPS PDSCH with repetition, multiple PDSCHs refer to multiple PDSCHs in all groups.

Under the conditions of Option 1 or Option 2, one or more of the above-mentioned solutions 3-1, 3-2, 3-3, 3-4, 3-5, 3-6 and 3-7 are used.

In some embodiments, regarding execution steps on the base station side, reference may be made to the relevant description content on the terminal side, which will not be repeated here.

In the examples of the present disclosure, some or all of the steps and their optional implementations may be arbitrarily combined with some or all of the steps in other examples, and may also be arbitrarily combined with optional implementations of other embodiments.

FIG. 10 is a block diagram of a terminal according to an embodiment. As shown In FIG. 10, the terminal 100 may include a receiving module 110 and a determining module 120.

The receiving module 110 is configured to receive downlink control information (DCI), in which the DCI indicates a plurality of physical downlink shared channel (PDSCH) transmissions in a plurality of time slots

The determining module 120 is configured to determine, according to the DCI, a frequency domain range used for a PDSCH transmission on one or more symbols used for the PDSCH transmission in each time slot, in which a symbol includes at least one of a sub-band full-duplex (SBFD) symbol or a non-SBFD symbol.

In some embodiments, the receiving module 110 is further configured to:
receive first information, in which the first information indicates at least one of:
a category of symbols usable for the plurality of PDSCH transmissions; or
a category of one or more symbols usable for any one of the plurality of PDSCH transmissions.

In some embodiments, the first information indicates at least one of:
the plurality of PDSCH transmissions being capable of using SBFD symbols and non-SBFD symbols, and any one of the plurality of PDSCH transmissions being capable of using one or more SBFD symbols or one or more non-SBFD symbols;
the plurality of PDSCH transmissions being capable of using SBFD symbols and non-SBFD symbols, and any one of the plurality of PDSCH transmissions being capable of using one or more SBFD symbols and one or more non-SBFD symbols;
the plurality of the PDSCH transmissions being capable of using SBFD symbols, and any one of the plurality of PDSCH transmissions being capable of using one or more SBFD symbols; or
the plurality of PDSCH transmissions being capable of using non-SBFD symbols, and any one of the plurality of PDSCH transmissions being capable of using one or more non-SBFD symbols.

In some embodiments, the determining module 120 is configured to perform at least one of:
for any time slot of the plurality of time slots, in a case where one or more symbols used for a PDSCH transmission in the any time slot comprise one or more non-SBFD symbols, determining a frequency domain range used for the PDSCH transmission on the one or more non-SBFD symbols as a first frequency domain range, in which the first frequency domain range is a frequency domain range indicated by the DCI for the one or more non-SBFD symbols; or
for any time slot of the plurality of time slots, in a case where one or more symbols used for a PDSCH transmission in the any time slot comprise one or more SBFD symbols, determining a frequency domain range used for the PDSCH transmission on the one or more SBFD symbols as a target frequency domain range.

In some embodiments, the target frequency domain range is a second frequency domain range, wherein the second frequency domain range is a frequency domain range where the first frequency domain range overlaps with a frequency domain range used for a downlink (DL) transmission on the one or more SBFD symbols;
or the target frequency domain range is a third frequency domain range, wherein the third frequency domain range is a frequency domain range indicated by the DCI for the one or more SBFD symbols;
or in a case where a first condition is met, the target frequency domain range is a fourth frequency domain range, wherein the first condition comprises: a bandwidth used for a DL transmission on the one or more SBFD symbols being greater than or equal to a bandwidth of the first frequency domain range.

In some embodiments, a number of resource blocks (RBs) comprised in the fourth frequency domain range is equal to a number of RBs comprised in the first frequency domain range, and the fourth frequency domain range is a frequency domain range where a fifth frequency domain range overlaps with a frequency domain range used for the DL transmission on the one or more SBFD symbols; a starting RB of the fifth frequency domain range is a starting RB in a bandwidth part (BWP), or an ending RB of the fifth frequency domain range is an ending RB in a BWP.

In some embodiments, the determining module 120 is further configured to:
for any time slot of the plurality of time slots, in a case where the one or more symbols used for the PDSCH transmission in the any time slot include the one or more SBFD symbols and the first condition is not met, determine not to receive a PDSCH in the any time slot.

In some embodiments, the determining module 120 is configured to perform at least one of:
in a case where one or more symbols used for a PDSCH transmission in at least one time slot of the plurality of time slots comprise one or more non-SBFD symbols, determining the frequency domain range used for the PDSCH transmission in each time slot as a first frequency domain range, in which the first frequency domain range is a frequency domain range indicated by the DCI for the one or more non-SBFD symbols; or
in a case where one or more symbols used for a PDSCH transmission in at least one time slot of the plurality of time slots comprise one or more SBFD symbols, determining the frequency domain range used for the PDSCH transmission in each time slot as a second frequency domain range, in which the second frequency domain range is a frequency domain range where the first frequency domain range overlaps with a frequency domain range used for a DL transmission on the one or more SBFD symbols.

In some embodiments, the determining module 120 is further configured to:
for any time slot of the plurality of time slots, in a case where the frequency domain range used for the PDSCH transmission in the any time slot is determined as the first frequency domain range, the one or more symbols used for the PDSCH transmission in the any time slot comprise the one or more SBFD symbols and the first frequency domain range has a frequency domain range overlapped with a frequency domain range for a non-DL transmission on the one or more SBFD symbols, determining not to receive a PDSCH in the time slot.

In some embodiments, the first information comprises an information field;
a value of the information field is a first bit value, and the first information indicates that the plurality of PDSCH transmissions are capable of using SBFD symbols and non-SBFD symbols, and any one of the plurality of PDSCH transmissions is capable of using one or more SBFD symbols or one or more non-SBFD symbols;
or a value of the information field is a second bit value, and the first information indicates that the plurality of PDSCH transmissions are capable of using SBFD symbols and non-SBFD symbols, and any one of the plurality of PDSCH transmissions is capable of using one or more SBFD symbols and one or more non-SBFD symbols;
or a value of the information field is a third bit value, and the first information indicates that the plurality of PDSCH transmissions are capable of using SBFD symbols, and any one of the plurality of PDSCH transmissions is capable of using one or more SBFD symbols;
or a value of the information field is a fourth bit value, and the first information indicates that the plurality of PDSCH transmissions are capable of using non-SBFD symbols, and any one of the plurality of PDSCH transmissions is capable of using one or more non-SBFD symbols.

In some embodiments, the determining module 120 is configured to perform at least one of:
for any time slot of the plurality of time slots, in a case where one or more symbols where a PDSCH in the any time slot is located comprise at least one uplink (UL) symbol or comprise both SBFD and non-SBFD symbols, determining not to receive the PDSCH in the any time slot, in which the value of the information field is the first bit value;
for any time slot of the plurality of time slots, in a case where one or more symbols where a PDSCH in the any time slot is located comprise at least one UL symbol, determining not to receive the PDSCH in the any time slot, in which the value of the information field is the second bit value;
for any time slot of the plurality of time slots, in a case where one or more symbols where a PDSCH in the any time slot is located comprise at least one non-SBFD symbol, determining not to receive the PDSCH in the any time slot, in which the value of the information field is the third bit value; or
for any time slot of the plurality of time slots, in a case where one or more symbols where a PDSCH in the any time slot is located comprise at least one SBFD symbol or UL symbol, determining not to receive the PDSCH in the any time slot, in which the value of the information field is the fourth bit value.

In some embodiments, a PDSCH in the plurality of time slots includes at least one of:
a retransmitted PDSCH;
a semi-persistent scheduling (SPS) PDSCH which is not retransmitted; or
a plurality of PDSCHs scheduled by a single DCI.

Regarding the terminal in the above embodiment, the specific manner in which each module performs operations and the beneficial effects thereof have been described in detail in the embodiments of the information processing method performed by the terminal, which will not be elaborated here.

FIG. 11 is a block diagram of a network device according to an embodiment. As shown In FIG. 11, the network device 200 may include a sending module 210.

The sending module 210 is configured to send downlink control information (DCI), in which the DCI indicates a plurality of physical downlink shared channel (PDSCH) transmissions in a plurality of time slots, each of one or more symbols used for a PDSCH transmission in each time slot comprises at least one of a sub-band full-duplex (SBFD) symbol or a non-SBFD symbol, and a frequency domain range used for the PDSCH transmission on one or more SBFD symbols is the same as or different from a frequency domain range used for the PDSCH transmission on one or more non-SBFD symbols.

In some embodiments, the sending module 210 is further configured to:
send first information, in which the first information indicates at least one of:
a category of symbols usable for the plurality of PDSCH transmissions; or
a category of one or more symbols usable for any one of the plurality of PDSCH transmissions.

In some embodiments, the first information indicates at least one of:
the plurality of PDSCH transmissions being capable of using SBFD symbols and non-SBFD symbols, and any one of the plurality of PDSCH transmissions being capable of using one or more SBFD symbols or one or more non-SBFD symbols;
the plurality of PDSCH transmissions being capable of using SBFD symbols and non-SBFD symbols, and any one of the plurality of PDSCH transmissions being capable of using one or more SBFD symbols and one or more non-SBFD symbols;
the plurality of the PDSCH transmissions being capable of using SBFD symbols, and any one of the plurality of PDSCH transmissions being capable of using one or more SBFD symbols; or
the plurality of PDSCH transmissions being capable of using non-SBFD symbols, and any one of the plurality of PDSCH transmissions being capable of using one or more non-SBFD symbols.

In some embodiments, for any time slot of the plurality of time slots, in a case where one or more symbols used for a PDSCH transmission in the any time slot include one or more non-SBFD symbols, a frequency domain range used for the PDSCH transmission on the one or more non-SBFD symbols is a first frequency domain range, in which the first frequency domain range is a frequency domain range indicated by the DCI for the one or more non-SBFD symbols;
and/or for any time slot of the plurality of time slots, in a case where one or more symbols used for a PDSCH transmission in the any time slot include one or more SBFD symbols, a frequency domain range used for the PDSCH transmission on the one or more SBFD symbols is a target frequency domain range.

In some embodiments, the target frequency domain range is a second frequency domain range, wherein the second frequency domain range is a frequency domain range where the first frequency domain range overlaps with a frequency domain range used for a downlink (DL) transmission on the one or more SBFD symbols;
or the target frequency domain range is a third frequency domain range, wherein the third frequency domain range is a frequency domain range indicated by the DCI for the one or more SBFD symbols;
or in a case where a first condition is met, the target frequency domain range is a fourth frequency domain range, wherein the first condition comprises: a bandwidth used for a DL transmission on the one or more SBFD symbols being greater than or equal to a bandwidth of the first frequency domain range.

In some embodiments, a number of resource blocks (RBs) comprised in the fourth frequency domain range is equal to a number of RBs comprised in the first frequency domain range, and the fourth frequency domain range is a frequency domain range where a fifth frequency domain range overlaps with a frequency domain range used for the DL transmission on the one or more SBFD symbols; a starting RB of the fifth frequency domain range is a starting RB in a bandwidth part (BWP), or an ending RB of the fifth frequency domain range is an ending RB in a BWP.

In some embodiments, in a case where one or more symbols used for a PDSCH transmission in at least one time slot of the plurality of time slots include one or more non-SBFD symbols, the frequency domain range used for the PDSCH transmission in each time slot is a first frequency domain range, in which the first frequency domain range is a frequency domain range indicated by the DCI for the one or more non-SBFD symbols;
or in a case where one or more symbols used for a PDSCH transmission in at least one time slot of the plurality of time slots include one or more SBFD symbols, the frequency domain range used for the PDSCH transmission in each time slot is a second frequency domain range, in which the second frequency domain range is a frequency domain range where the first frequency domain range overlaps with a frequency domain range used for a DL transmission on the one or more SBFD symbols.

In some embodiments, the first information comprises an information field; a value of the information field is a first bit value, and the first information indicates that the plurality of PDSCH transmissions are capable of using SBFD symbols and non-SBFD symbols, and any one of the plurality of PDSCH transmissions is capable of using one or more SBFD symbols or one or more non-SBFD symbols;
or a value of the information field is a second bit value, and the first information indicates that the plurality of PDSCH transmissions are capable of using SBFD symbols and non-SBFD symbols, and any one of the plurality of PDSCH transmissions is capable of using one or more SBFD symbols and one or more non-SBFD symbols;
or a value of the information field is a third bit value, and the first information indicates that the plurality of PDSCH transmissions are capable of using SBFD symbols, and any one of the plurality of PDSCH transmissions is capable of using one or more SBFD symbols;
or a value of the information field is a fourth bit value, and the first information indicates that the plurality of PDSCH transmissions are capable of using non-SBFD symbols, and any one of the plurality of PDSCH transmissions is capable of using one or more non-SBFD symbols.

In some embodiments, a PDSCH in the plurality of time slots includes at least one of:
a retransmitted PDSCH;
a semi-persistent scheduling (SPS) PDSCH which is not retransmitted; or
a plurality of PDSCHs scheduled by a single DCI.

Regarding the network device in the above embodiment, the specific manner and beneficial effects of each module performing operations have been described in detail in the embodiment of the information processing method performed by the network device, which will not be elaborated here.

An embodiment of the present disclosure provides a communication system, including: a terminal and a network device, in which the terminal is configured to perform the information processing method shown in FIG. 3, and the network device is configured to perform the information processing method shown in FIG. 8.

An embodiment of the present disclosure provides a communication device, including: one or more processors;
in which the communication device is configured to perform the information processing method provided by any of the aforementioned technical solutions.

The processor may include various types of storage media, which are non-transitory computer storage media that can continue to retain information stored thereon after the communication device loses power.

Here, the communication device includes: a terminal or a network device, and the network device may be, for example, a base station.

The processor may be connected to the memory via a bus or the like, and is used to read an executable program stored in the memory, for example, at least one of the methods shown in FIG. 3 or FIG. 8.

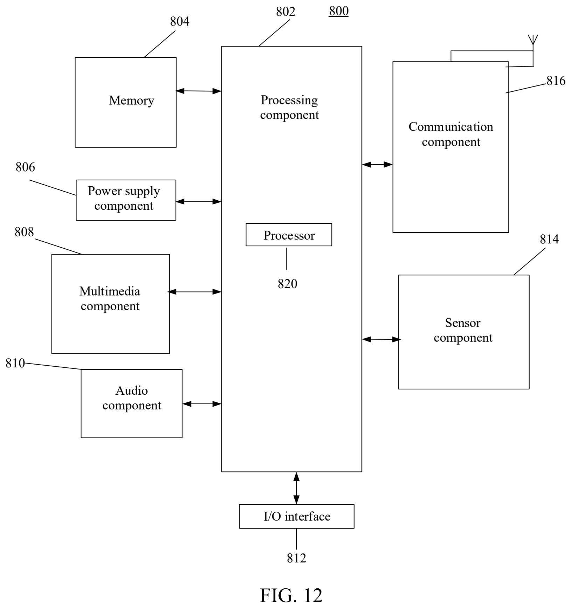

FIG. 12 is a schematic block diagram of a UE 800 according to an embodiment of the present disclosure. For example, the UE 800 may be a mobile phone, a computer, a digital broadcasting terminal, a message transceiver device, a gaming console, a tablet device, a medical device, a fitness device, a personal digital assistant, etc.

Referring to FIG. 12, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the UE 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the UE 800. Examples of such data include instructions for any application or method operated on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to the various components of the UE 800. The power supply component 806 may include a power management system, one or more power supplies, and other components associated with generating, managing, and distributing power for the UE 800.

The multimedia component 808 includes a screen providing an output interface between the UE 800 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the UE 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC) that is configured to receive external audio signals when the UE 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the UE 800. For example, the sensor component 814 can detect the open/closed state of the UE 800, the relative positioning of components, such as the display and keypad of the UE 800, and the sensor component 814 can also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication between the UE 800 and other devices by wired or wireless means. The UE 800 may access a wireless network based on a communication standard, such as Wi-Fi, 4G or 5G, or their combination. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In an embodiment, a non-transitory computer-readable storage medium including instructions is also provided, such as a memory 804 including instructions, and the above instructions can be executed by the processor 820 of the UE 800. For example, the non-transitory computer-readable storage medium may be a ROM, a random access memory (RAM), a CD-ROM, a magnetic tape, a floppy disk, an optical data storage device, etc.

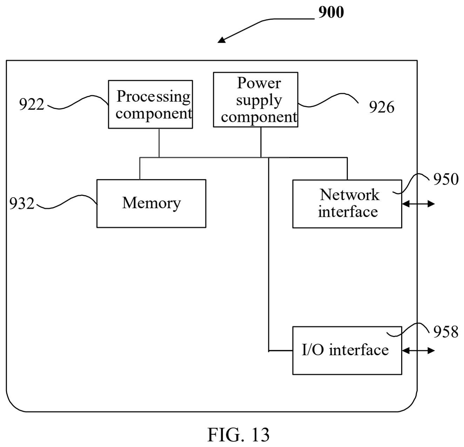

As shown in FIG. 13, an embodiment of the present disclosure shows a structure of a communication device 1300. The communication device 1300 may be provided as a network side device. The communication device may be a base station.

Referring to FIG. 13, the network device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned method applied to the network device, for example, the method shown in any of FIG. 4 to FIG. 9.

The network device 900 may also include a power supply component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server ^{™}, Mac OS X ^{™}, Unix ^{™}, Linux ^{™}, Free BSD ^{™} or the like.

In the absence of contradiction, each step in a certain implementation or embodiment can be implemented as an independent embodiment, and the steps can be arbitrarily combined. For example, a solution after removing some steps in a certain implementation or embodiment can also be implemented as an independent embodiment, and the order of the steps in a certain implementation or embodiment can be arbitrarily exchanged. In addition, the optional methods or optional examples in a certain implementation or embodiment can be arbitrarily combined; in addition, the various implementations or embodiments can be arbitrarily combined. For example, some or all steps of different implementations or embodiments can be arbitrarily combined, and a certain implementation or embodiment can be arbitrarily combined with the optional methods or optional embodiments of other implementations or embodiments.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. An information processing method, performed by a user equipment (UE), comprising:
receiving downlink control information (DCI) that indicates a plurality of physical downlink shared channel (PDSCH) transmissions in a plurality of time slots; and
determining, according to the DCI, a frequency domain range used for a PDSCH transmission on one or more symbols used for the PDSCH transmission in each time slot, wherein a symbol comprises at least one of a sub-band full-duplex (SBFD) symbol or a non-SBFD symbol.

2. The method of claim 1, further comprising:
receiving first information that indicates at least one of:
a category of symbols usable for the plurality of PDSCH transmissions; or
a category of one or more symbols usable for any one of the plurality of PDSCH transmissions.

3. The method of claim 2, wherein the first information indicates at least one of:
the plurality of PDSCH transmissions being capable of using SBFD symbols and non-SBFD symbols, and any one of the plurality of PDSCH transmissions being capable of using one or more SBFD symbols or one or more non-SBFD symbols;
the plurality of PDSCH transmissions being capable of using SBFD symbols and non-SBFD symbols, and any one of the plurality of PDSCH transmissions being capable of using one or more SBFD symbols and one or more non-SBFD symbols;
the plurality of the PDSCH transmissions being capable of using SBFD symbols, and any one of the plurality of PDSCH transmissions being capable of using one or more SBFD symbols; or
the plurality of PDSCH transmissions being capable of using non-SBFD symbols, and any one of the plurality of PDSCH transmissions being capable of using one or more non-SBFD symbols.

4. The method of any of claims 1-3, wherein determining, according to the DCI, the frequency domain range used for the PDSCH transmission on the one or more symbols used for the PDSCH transmission in each time slot comprises at least one of:
for any time slot of the plurality of time slots, in a case where one or more symbols used for a PDSCH transmission in the any time slot comprise one or more non-SBFD symbols, determining a frequency domain range used for the PDSCH transmission on the one or more non-SBFD symbols as a first frequency domain range, wherein the first frequency domain range is a frequency domain range indicated by the DCI for the one or more non-SBFD symbols; or
for any time slot of the plurality of time slots, in a case where one or more symbols used for a PDSCH transmission in the any time slot comprise one or more SBFD symbols, determining a frequency domain range used for the PDSCH transmission on the one or more SBFD symbols as a target frequency domain range.

5. The method of claim 4, wherein,
the target frequency domain range is a second frequency domain range, wherein the second frequency domain range is a frequency domain range where the first frequency domain range overlaps with a frequency domain range used for a downlink (DL) transmission on the one or more SBFD symbols;
or
the target frequency domain range is a third frequency domain range, wherein the third frequency domain range is a frequency domain range indicated by the DCI for the one or more SBFD symbols;
or
in a case where a first condition is met, the target frequency domain range is a fourth frequency domain range, wherein the first condition comprises: a bandwidth used for a DL transmission on the one or more SBFD symbols being greater than or equal to a bandwidth of the first frequency domain range.

6. The method of claim 5, wherein a number of resource blocks (RBs) comprised in the fourth frequency domain range is equal to a number of RBs comprised in the first frequency domain range, and the fourth frequency domain range is a frequency domain range where a fifth frequency domain range overlaps with a frequency domain range used for the DL transmission on the one or more SBFD symbols;
a starting RB of the fifth frequency domain range is a starting RB in a bandwidth part (BWP), or an ending RB of the fifth frequency domain range is an ending RB in a BWP.

7. The method of claim 5 or 6, further comprising:
for any time slot of the plurality of time slots, in a case where the one or more symbols used for the PDSCH transmission in the any time slot comprise the one or more SBFD symbols and the first condition is not met, determining not to receive a PDSCH in the any time slot.

8. The method of any of claims 1-3, wherein determining, according to the DCI, the frequency domain range used for the PDSCH transmission on the one or more symbols used for the PDSCH transmission in each time slot comprises at least one of:
in a case where one or more symbols used for a PDSCH transmission in at least one time slot of the plurality of time slots comprise one or more non-SBFD symbols, determining the frequency domain range used for the PDSCH transmission in each time slot as a first frequency domain range, wherein the first frequency domain range is a frequency domain range indicated by the DCI for the one or more non-SBFD symbols; or
in a case where one or more symbols used for a PDSCH transmission in at least one time slot of the plurality of time slots comprise one or more SBFD symbols, determining the frequency domain range used for the PDSCH transmission in each time slot as a second frequency domain range, wherein the second frequency domain range is a frequency domain range where the first frequency domain range overlaps with a frequency domain range used for a DL transmission on the one or more SBFD symbols.

9. The method of claim 8, further comprising:
for any time slot of the plurality of time slots, in a case where the frequency domain range used for the PDSCH transmission in the any time slot is determined as the first frequency domain range, the one or more symbols used for the PDSCH transmission in the any time slot comprise the one or more SBFD symbols and the first frequency domain range has a frequency domain range overlapped with a frequency domain range for a non-DL transmission on the one or more SBFD symbols, determining not to receive a PDSCH in the time slot.

10. The method of claim 2 or 3, wherein the first information comprises an information field; wherein,
a value of the information field is a first bit value, and the first information indicates that the plurality of PDSCH transmissions are capable of using SBFD symbols and non-SBFD symbols, and any one of the plurality of PDSCH transmissions is capable of using one or more SBFD symbols or one or more non-SBFD symbols;
or
a value of the information field is a second bit value, and the first information indicates that the plurality of PDSCH transmissions are capable of using SBFD symbols and non-SBFD symbols, and any one of the plurality of PDSCH transmissions is capable of using one or more SBFD symbols and one or more non-SBFD symbols;
or
a value of the information field is a third bit value, and the first information indicates that the plurality of PDSCH transmissions are capable of using SBFD symbols, and any one of the plurality of PDSCH transmissions is capable of using one or more SBFD symbols;
or
a value of the information field is a fourth bit value, and the first information indicates that the plurality of PDSCH transmissions are capable of using non-SBFD symbols, and any one of the plurality of PDSCH transmissions is capable of using one or more non-SBFD symbols.

11. The method of claim 10, further comprising at least one of:
for any time slot of the plurality of time slots, in a case where one or more symbols where a PDSCH in the any time slot is located comprise at least one uplink (UL) symbol or comprise both SBFD and non-SBFD symbols, determining not to receive the PDSCH in the any time slot, wherein the value of the information field is the first bit value;
for any time slot of the plurality of time slots, in a case where one or more symbols where a PDSCH in the any time slot is located comprise at least one UL symbol, determining not to receive the PDSCH in the any time slot, wherein the value of the information field is the second bit value;
for any time slot of the plurality of time slots, in a case where one or more symbols where a PDSCH in the any time slot is located comprise at least one non-SBFD symbol, determining not to receive the PDSCH in the any time slot, wherein the value of the information field is the third bit value; or
for any time slot of the plurality of time slots, in a case where one or more symbols where a PDSCH in the any time slot is located comprise at least one SBFD symbol or UL symbol, determining not to receive the PDSCH in the any time slot, wherein the value of the information field is the fourth bit value.

12. The method of any of claims 1-11, wherein a PDSCH in the plurality of time slots comprises at least one of:
a retransmitted PDSCH;
a semi-persistent scheduling (SPS) PDSCH which is not retransmitted; or
a plurality of PDSCHs scheduled by a single DCI.

13. An information processing method, performed by a network device, comprising:
sending downlink control information (DCI) that indicates a plurality of physical downlink shared channel (PDSCH) transmissions in a plurality of time slots, each of one or more symbols used for a PDSCH transmission in each time slot comprises at least one of a sub-band full-duplex (SBFD) symbol or a non-SBFD symbol, and a frequency domain range used for the PDSCH transmission on one or more SBFD symbols is the same as or different from a frequency domain range used for the PDSCH transmission on one or more non-SBFD symbols.

14. The method of claim 13, further comprising:
sending first information that indicates at least one of:
a category of symbols usable for the plurality of PDSCH transmissions; or
a category of one or more symbols usable for any one of the plurality of PDSCH transmissions.

15. The method of claim 14, wherein the first information indicates at least one of:
the plurality of PDSCH transmissions being capable of using SBFD symbols and non-SBFD symbols, and any one of the plurality of PDSCH transmissions being capable of using one or more SBFD symbols or one or more non-SBFD symbols;
the plurality of PDSCH transmissions being capable of using SBFD symbols and non-SBFD symbols, and any one of the plurality of PDSCH transmissions being capable of using one or more SBFD symbols and one or more non-SBFD symbols;
the plurality of the PDSCH transmissions being capable of using SBFD symbols, and any one of the plurality of PDSCH transmissions being capable of using one or more SBFD symbols; or
the plurality of PDSCH transmissions being capable of using non-SBFD symbols, and any one of the plurality of PDSCH transmissions being capable of using one or more non-SBFD symbols.

16. The method of any of claims 13-15, wherein,
for any time slot of the plurality of time slots, in a case where one or more symbols used for a PDSCH transmission in the any time slot comprise one or more non-SBFD symbols, a frequency domain range used for the PDSCH transmission on the one or more non-SBFD symbols is a first frequency domain range, wherein the first frequency domain range is a frequency domain range indicated by the DCI for the one or more non-SBFD symbols;
and/or
for any time slot of the plurality of time slots, in a case where one or more symbols used for a PDSCH transmission in the any time slot comprise one or more SBFD symbols, a frequency domain range used for the PDSCH transmission on the one or more SBFD symbols is a target frequency domain range.

17. The method of claim 16, wherein,
the target frequency domain range is a second frequency domain range, wherein the second frequency domain range is a frequency domain range where the first frequency domain range overlaps with a frequency domain range used for a downlink (DL) transmission on the one or more SBFD symbols;
or
the target frequency domain range is a third frequency domain range, wherein the third frequency domain range is a frequency domain range indicated by the DCI for the one or more SBFD symbols;
or
in a case where a first condition is met, the target frequency domain range is a fourth frequency domain range, wherein the first condition comprises: a bandwidth used for a DL transmission on the one or more SBFD symbols being greater than or equal to a bandwidth of the first frequency domain range.

18. The method of claim 17, wherein a number of resource blocks (RBs) comprised in the fourth frequency domain range is equal to a number of RBs comprised in the first frequency domain range, and the fourth frequency domain range is a frequency domain range where a fifth frequency domain range overlaps with a frequency domain range used for the DL transmission on the one or more SBFD symbols;
a starting RB of the fifth frequency domain range is a starting RB in a bandwidth part (BWP), or an ending RB of the fifth frequency domain range is an ending RB in a BWP.

19. The method of any of claims 13-15, wherein,
in a case where one or more symbols used for a PDSCH transmission in at least one time slot of the plurality of time slots comprise one or more non-SBFD symbols, a frequency domain range used for a PDSCH transmission in each time slot is a first frequency domain range, wherein the first frequency domain range is a frequency domain range indicated by the DCI for the one or more non-SBFD symbols;
or
in a case where one or more symbols used for a PDSCH transmission in at least one time slot of the plurality of time slots comprise one or more SBFD symbols, a frequency domain range used for a PDSCH transmission in each time slot is a second frequency domain range, wherein the second frequency domain range is a frequency domain range where the first frequency domain range overlaps with a frequency domain range for a DL transmission on the one or more SBFD symbols.

20. The method of claim 14 or 15, wherein the first information comprises an information field; wherein,
a value of the information field is a first bit value, and the first information indicates that the plurality of PDSCH transmissions are capable of using SBFD symbols and non-SBFD symbols, and any one of the plurality of PDSCH transmissions is capable of using one or more SBFD symbols or one or more non-SBFD symbols;
or
a value of the information field is a second bit value, and the first information indicates that the plurality of PDSCH transmissions are capable of using SBFD symbols and non-SBFD symbols, and any one of the plurality of PDSCH transmissions is capable of using one or more SBFD symbols and one or more non-SBFD symbols;
or
a value of the information field is a third bit value, and the first information indicates that the plurality of PDSCH transmissions are capable of using SBFD symbols, and any one of the plurality of PDSCH transmissions is capable of using one or more SBFD symbols;
or
a value of the information field is a fourth bit value, and the first information indicates that the plurality of PDSCH transmissions are capable of using non-SBFD symbols, and any one of the plurality of PDSCH transmissions is capable of using one or more non-SBFD symbols.

21. The method of any of claims 13-20, wherein a PDSCH in the plurality of time slots comprises at least one of:
a retransmitted PDSCH;
a semi-persistent scheduling (SPS) PDSCH which is not retransmitted; or
a plurality of PDSCHs scheduled by a single DCI.

22. A user equipment (UE), comprising:
a receiving module, configured to receive downlink control information (DCI), wherein the DCI indicates a plurality of physical downlink shared channel (PDSCH) transmissions in a plurality of time slots; and
a determining module, configured to determine, according to the DCI, a frequency domain range used for a PDSCH transmission on one or more symbols used for the PDSCH transmission in each time slot, wherein a symbol comprises at least one of a sub-band full-duplex (SBFD) symbol or a non-SBFD symbol.

23. A network device, comprising:
a sending module, configured to send downlink control information (DCI), wherein the DCI indicates a plurality of physical downlink shared channel (PDSCH) transmissions in a plurality of time slots, each of one or more symbols used for a PDSCH transmission in each time slot comprises at least one of a sub-band full-duplex (SBFD) symbol or a non-SBFD symbol, and a frequency domain range used for the PDSCH transmission in one or more SBFD symbols is the same as or different from a frequency domain range used for the PDSCH transmission in one or more non-SBFD symbols.

24. A user equipment (UE), comprising:
one or more processors;
wherein the UE is configured to perform the information processing method of any one of claims 1 to 12.

25. A network device, comprising:
one or more processors;
wherein the network device is configured to perform the information processing method of any one of claims 13 to 21.

26. A communication system, comprising a user equipment (UE) and a network device; wherein the UE is configured to perform the information processing method of any one of claims 1 to 12, and the network device is configured to perform the information processing method of any one of claims 13 to 21.

27. A storage medium having instructions stored thereon, wherein when the instructions are executed on a communication device, the communication device is caused to perform the information processing method of any one of claims 1 to 12, or claims 13 to 21.
